(19) Europäisches Patentamt
European Patent Office
Office européen des brevets

(11) **EP 1 835 370 A2**

(12) **DEMANDE DE BREVET EUROPEEN**

(43) Date de publication:
**19.09.2007 Bulletin 2007/38**

(51) Int Cl.:
***G05D 1/10*** *(2006.01)*

(21) Numéro de dépôt: **07104296.4**

(22) Date de dépôt: **16.03.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK YU**

(30) Priorité: **17.03.2006  FR 0602382**

(71) Demandeur: **THALES**
**92200 Neuilly sur Seine (FR)**

(72) Inventeurs:
• **Taillibert, Patrick**
**78160 Marly le Roi (FR)**
• **Soulignac, Michaël**
**78290 Elancourt (FR)**

(74) Mandataire: **Lucas, Laurent Jacques**
**Marks & Clerk France**
**31-33 Avenue Aristide Briand**
**94117 Arcueil Cedex (FR)**

(54) **Planificateur automatique de trajectoire**

(57)    L'invention concerne le domaine les procédés permettant de planifier de manière automatique la trajectoire à faire suivre à un engin dans un espace considéré pour remplir de manière optimale une mission donnée caractérisée par un certain nombre de points de passage.

le procédé selon l'invention procède en trois étapes

- une étape de calcul des chemins optimaux reliant les différents points de passage deux à deux, un chemin optimal correspondant au temps de parcours le plus faible entre deux points donnés,

- une étape de détermination d'un itinéraire optimal à partir des chemins optimaux calculés, l'itinéraire optimal étant défini comme une association, dans un ordre défini répondant aux contraintes de la mission, de chemins optimaux permettant d'aller du point de départ au point d'arrivée dans un temps compatible de la durée de la mission,

- une étape de modulation de la vitesse de l'engin le long de l'itinéraire optimal déterminé, pour prendre en compte la présence d'obstacles mobiles dont la trajectoire coupe l'itinéraire optimal déterminé.

L'invention s'applique en particulier à la planification de la trajectoire d'un drone conformément à la mission qui lui est confiée et à l'espace dans lequel se place la mission.

Fig. 1

**Description**

DOMAINE DE L'INVENTION

L'invention concerne de manière générale tous les domaines d'activité dans lesquels on est amené à planifier en temps réel l'accomplissement de tâches diverses, en différents lieux géographiques, dans un ordre plus ou moins déterminé et dans des intervalles de temps fixés. Elle s'applique en particulier au problème de la génération de plans de vol, et en particulier de la génération de plans de vol pour des aéronefs automatiques tels que les drones. L'invention n'est cependant pas limitée au seul domaine de la génération de plans de vol mais peut aussi s'appliquer à des véhicules terrestres ou même à des individus ou groupes d'individus.

CONTEXTE DE L'INVENTION - ART ANTERIEUR

Dans un contexte général de surveillance de territoires, il est connu de confier à des engins automatiques, des missions consistant à atteindre et à observer des lieux géographiques qui présentent un intérêt particulier, par exemple un intérêt stratégique. Généralement pour être complètement efficace ces observations doivent être réalisées à des instants précis durant lesquels se produisent des événements ou des actions que l'on souhaite observer et/ou dont on souhaite contrôler le bon déroulement. S'agissant de vastes zones de territoire, il est également connu, pour effectuer cette surveillance, d'utiliser de préférence des engins volants automatiques, de type drone, dont le plan de vol est établi de façon à réaliser un ensemble d'observation en différents lieux et à des moments déterminés.

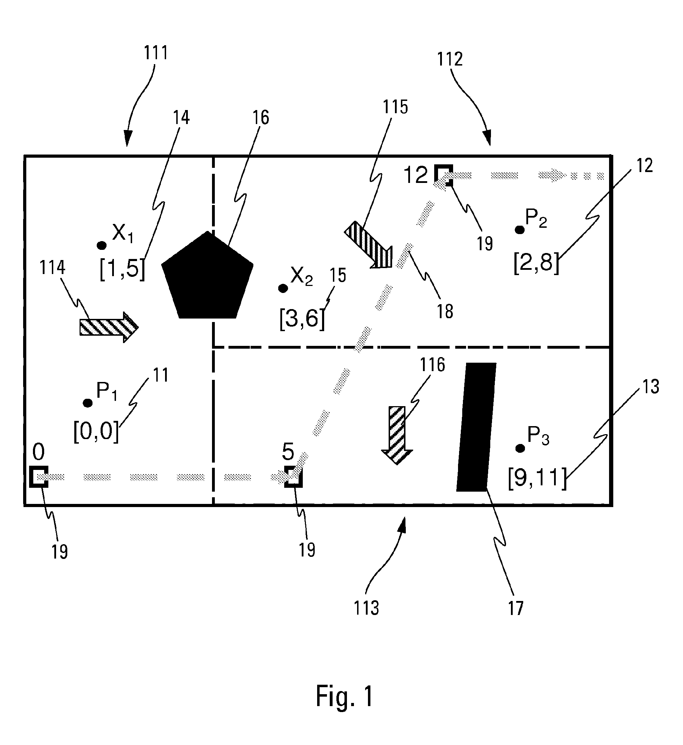

Le contexte d'une mission peut être représenté d'une manière schématique par un diagramme tel que celui de la figure 1. Le contexte d'un mission donnée prend en compte la mission elle-même qui consiste à faire évoluer un engin mobile, un drone par exemple, dans un espace donné, de façon à ce qu'il se rende d'un point $P_1$ à un point $P_N$ ($P_3$ dans l'exemple) dans un intervalle de temps donné, en passant par des points intermédiaires $P_i$ ($P_2$ dans l'exemple), et $X_i$ ($X_1$ et $X_2$ dans l'exemple), points au niveau desquelles il peut par exemple être amené à effectuer certaine tâches, des tâches d'observation par exemple. D'une manière générale une mission peut être caractérisée par un ensemble de points de passage $P_i$ représentant des points géographiques que l'engin doit rallier durant sa mission, dans un ordre déterminé, et par un ensemble de points $X_i$ qui représentent des points géographiques que l'engin a pour mission de rallier sans avoir à respecter un ordre imposé. Une mission peut en outre être caractérisée, pour chaque point $P_i$ ou $X_i$, par l'intervalle de temps, ou plage horaire, à l'intérieur duquel doit avoir lieu le passage de l'engin sur le point considéré. Cet intervalle de temps traduit généralement le fait que le passage par ce point dans le laps de temps considéré, présente un intérêt opérationnel particulier.

Ainsi dans l'exemple de la figure 1, l'engin mobile a pour mission de rallier successivement le points $P_1$ à l'instant initial 0, c'est à dire dans une plage horaire 11 réduite au seul instant 0, le point $P_2$ dans une plage horaire 12 comprise entre l'instant 2 et l'instant 8 et le point $P_3$ dans une plage horaire 13 comprise entre l'instant 9 et l'instant 11. De plus l'engin doit également rallier, sur son parcours entre $P_1$ et $P_3$, les points $X_1$ et $X_2$ respectivement dans les plages horaires 14 (entre l'instant 1 et l'instant 5) et 15 (entre l'instant 3 et l'instant 6) mais sans ordre imposé. L'itinéraire de la mission peut ainsi, par exemple, correspondre selon les cas à l'itinéraire ($P_1$, $P_2$, $X_1$, $X_2$, $P_3$) ou à l'itinéraire ($P_1$, $P_2$, $X_2$, $X_1$, $P_3$), ou encore à l'itinéraire ($P_1$, $X_1$, $X_2$, $P_2$, $P_3$).

La seule contrainte exprimée sur le ralliement de points $X_1$ et $X_2$ est ainsi donnée par les intervalles de temps, ou plages horaires, durant lesquels ces points doivent être visités. Ces plages horaires peuvent par exemple être comptées en instant discrétisés, à partir d'un instant $t_0$ de début de mission.

Une mission donnée conduit généralement l'engin mobile à suivre un itinéraire s'étendant sur un espace vaste à l'intérieur duquel se trouvent des obstacles pouvant entraver sa progression directe d'un point de passage à un autre et induire des points d'inflexion, des détours, le long du trajet. Ces obstacles peuvent par ailleurs être des structures ou des éléments de relief fixes, ou bien des éléments mobiles se déplaçant dans l'espace considéré et occupant donc des positions qui varient au cours du temps, en particulier pendant la durée de la mission. Le contexte qui caractérise la mission inclut donc également ces éléments qui peuvent être représentés comme l'illustre la figure 1, pour les obstacles fixes, par des formes 16, 17 ayant une position et une étendue données et pour les obstacles mobiles, par le tracé 18 de leur itinéraire, tracé jalonné de points de passage datés 19.

Une mission donnée peut d'autre part conduire le mobile à traverser des zones dans lesquelles les conditions climatiques, la vitesse du vent par exemple peuvent influencer la progression de l'engin. Ces conditions peuvent en outre varier d'une zone à l'autre de sorte que leur influence est variable le long du trajet parcouru par l'engin. Le contexte qui caractérise la mission inclut donc également ces éléments qui peuvent être représentés par la délimitation de zones dans lesquels les conditions climatiques à considérer sont stationnaires. Dans l'exemple de la figure 1, le contexte de la mission distingue ainsi trois zones de vent 111, 112 et 113 dont les directions sont matérialisées par les flèches 114, 115 et 116.

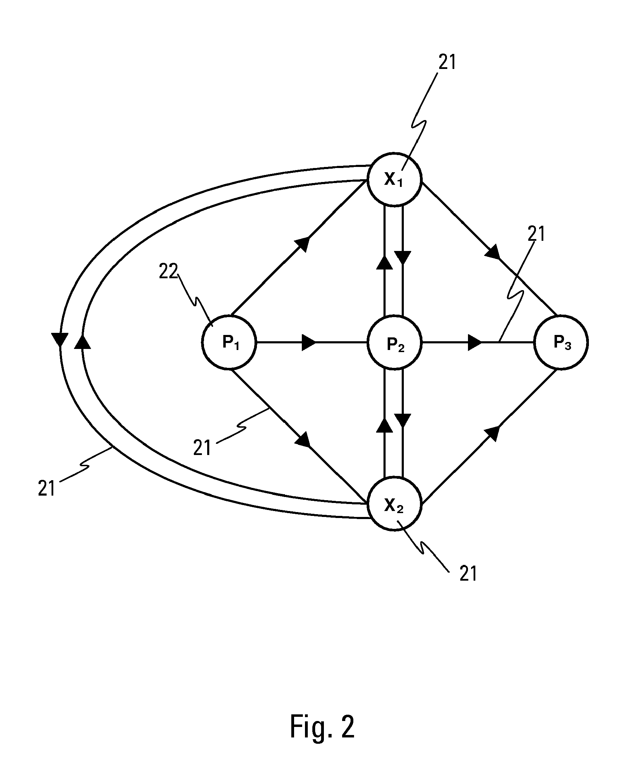

Par suite, le contexte caractérisant la mission étant défini, de la façon illustrée par la figure 1 par exemple, on est à même de déterminer, au moyen d'un diagramme tel que celui présenté à la figure 2, les différents trajets 21 que peut emprunter l'engin durant sa mission. Ce schéma tient compte de points de passage 22 dont l'ordre est imposé (i.e. les $P_i$) que des points de passage 23 dont l'ordre de passage ne présente pas un caractère de contrainte (i.e. les $X_i$). C'est donc en combinant différents trajets menant d'un point de passage à un autre, que l'itinéraire de l'engin doit être déterminé. Le choix des trajets empruntés pour construire l'itinéraire allant du point de départ au point d'arrivée de la mission, doit être effectué de façon à tenir compte des contraintes externes, en particulier des obstacles fixes et mobiles, ainsi que des zones de vent, ainsi que des contraintes opérationnelles propres à la mission, c'est à dire les intervalles de passage associés à chaque point ainsi que l'autonomie de l'engin.

Pour résumer, établir un plan de vol, ou plus généralement planifier l'itinéraire de la mission à effectuer, revient donc à prendre en compte des contraintes opérationnelles variées, hétérogènes, dont les principales sont les suivantes:

- La définition de points de passage, ou "Waypoints" selon la dénomination anglo-saxonne connue, qui symbolisent des lieux stratégiques à visiter (pour y prendre des photos, par exemple) et auxquels on peut associer deux types de contraintes :

- l'ordre de passage dans ces différents lieux, modélisé par exemple par un numéro,

- la plage horaire, modélisée par une fenêtre temporelle $F$ définie par une "date au plus tôt" et une "date au plus tard" (F = [DateAuPlusTôt, DateAuPlusTard]), qui détermine l'intervalle de temps, mesuré relativement à un instant de début de mission, durant lequel la visite du lieu considéré doit se produire;

- les conditions météorologiques, principalement des conditions de vent, qui sont modélisées par des vecteurs donnant la direction et la force du vent pour une zone considérée comme homogène. Ces conditions météorologiques ont en effet une influence directe sur la vitesse de progression de l'engin effectuant la mission, un drone par exemple.

- l'autonomie de l'engin qui permet de déterminer si un plan de vol envisagé est compatible des ressources de carburant disponibles: le but n'est pas ici d'optimiser la consommation de carburant (considérée comme constante dans le temps), mais simplement de s'assurer que la mission est faisable dans la limite du carburant disponible.

- la présence d'obstacles en considérant que les obstacles que l'engin doit éviter sont de deux natures :

- les obstacles fixes, qui peuvent consister en des éléments naturels (montagnes, zones de turbulences) dont le franchissement délicat pour l'engin, des bâtiments ou encore de zones à éviter pour des raisons stratégiques (présence de batteries d'artillerie ennemies, par exemple).
- les obstacles mobiles, catégorie dans laquelle entrent tous les objets volants dans la zone durant la mission et auxquels on associe des trajectoires plus ou moins complexes matérialisées par exemple par des segments de droites sur lesquels ces obstacles sont supposés se déplacer à vitesse constante, ainsi qu'un rayon de sécurité.

Il est à noter que la prise en compte des obstacles est particulièrement importante dans le cas particulier où l'engin considéré est un drone.
Si l'on considère l'ensemble de ces contraintes, on conçoit aisément que la planification d'un tel itinéraire constitue une tâche délicate et généralement relativement longue. Elle doit fournir au final un itinéraire qui ne conduise pas à sous-employer les capacités de l'engin en terme d'autonomie, ni inversement à faire suivre à l'engin un itinéraire trop long, conduisant l'engin à la panne en cours de mission.
Il est en outre à noter que cette élaboration nécessite parfois d'être réactualisée en temps réel, pendant le déroulement de la mission, notamment pour ajouter ou simplement modifier le nombre ou l'ordre des points de passage. Dans un tel cas l'itinéraire défini avant le début de la mission doit être modifié par l'opérateur qui supervise cette mission et les modifications doivent être communiquées à l'engin de manière suffisamment rapide pour que celui-ci puisse les prendre en compte sans compromettre le déroulement global de la mission. Cette réactualisation du planning doit en particulier prendre en compte la position courante de l'engin à l'instant où cette actualisation est décidée et la position qui sera atteinte par l'engin au moment ou l'actualisation sera transmise. On conçoit donc que cette actualisation doit pouvoir être réalisée dans les délais les plus brefs.
La complexité du problème posé conduit généralement les personnes en charge de l'élaboration des itinéraires ou plans de vol correspondants à utiliser des outils d'aide à l'élaboration. Certains de ces outils peuvent effectuer des calculs partiels et fournir des résultats permettant à l'opérateur de gagner du temps dans le cadre d'une élaboration manuelle "assistée" du planning de la mission. D'autres outils, plus élaborés, mettent en oeuvre des procédés permettant à partir de paramètres et de contraintes d'entrée fournis par l'opérateur d'élaborer de manière automatique et de proposer à l'opérateur un itinéraire compatible de ces contraintes et destiné à être directement téléchargé dans la mémoire de l'organe qui gère les mouvements de l'engin, ainsi que ses paramètres de fonctionnement. Ces outils, ou planificateurs automatiques, présentent l'avantage de libérer l'opérateur de la tâche d'élaboration proprement dite consistant à calculer de l'itinéraire optimal de la mission et de consacrer son temps à l'analyse du contexte opérationnel de la mission du drone, analyse qui se traduit par la détermination des contraintes attachées à la mission, contraintes qui servent en outre de paramètre d'entrée à ces outils.

Les problèmes liés à la planification automatique d'un itinéraire, d'un plan de vol par exemple, sont des problèmes massivement étudiés depuis les années 70. Leur résolution a donné lieu à l'élaboration de nombreux procédés, qui sont pour la plupart encore mis en oeuvre dans les outils actuels. Ces procédés font appel au formalisme suivant:

Si on considère un engin mobile M évoluant dans un espace euclidien E, on constate que l'ensemble des contraintes que subit M dans son mouvement restreint l'ensemble des positions possibles que peut occuper le mobile M à un ensemble de points $E_{valide}$ inclus dans l'espace E ($E_{valide} \subseteq E$).

A chaque déplacement de M on peut associer un coût c, correspondant au temps de déplacement (temps écoulé) ou à la variation de l'énergie du mobile M par exemple. Ce coût peut par exemple être mesuré par une fonction $\rho$ définie par la relation suivante:

$$\rho : \quad \begin{aligned} \left(E_{valide} \times [0,+\infty[\right)^2 \quad &\rightarrow \quad [0,+\infty[ \\ \left((x_{depart}, t_{depart}), (x_{arrivée}, t_{arrivée})\right) \quad \alpha \quad &\quad c \end{aligned} \qquad [1]$$

Partant de ce qui précède, planifier la trajectoire de M entre deux points A et B, consiste à trouver une fonction $\tau$ définie par:

$$\begin{cases} \tau : t \in [0,T] \ \alpha \ \ x \in E_{valide} \\ \tau(0) = A \\ \tau(T) = B \end{cases} \qquad [2]$$

et minimisant le coût total mesuré par $\rho$ (T désignant la date d'arrivée en B).

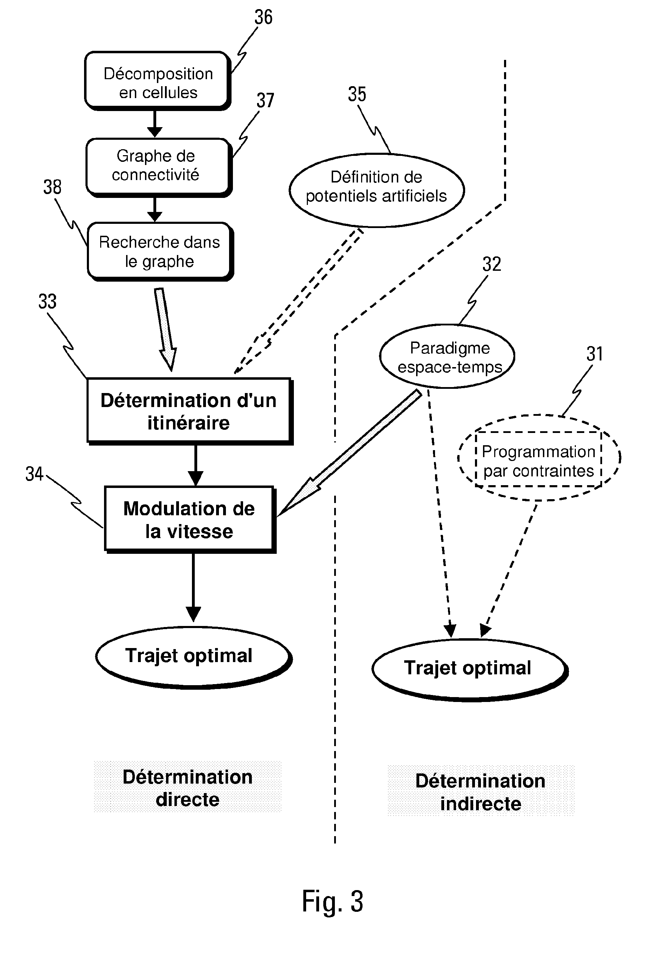

Pour déterminer la fonction $\tau$, Il existe différentes méthodes connues, non détaillées dans ce document. On précise simplement que ces diverses méthodes peuvent être classées, comme le résume la figure 3, en deux catégories, les méthodes de détermination directes et les méthodes indirectes.

Les méthodes directes consistent à calculer $\tau$ en une seule étape. Dans cette catégorie se trouvent essentiellement, de manière connue, les méthodes utilisant la programmation par contraintes et celles utilisant un modèle d'évolution prenant en compte le facteur temps, connu sous le nom de paradigme espace-temps. Ces procédés présentent chacun des inconvénients qui rendent leur utilisation relativement peu usuelle en particulier dans les procédés récemment développés.

Les méthodes 31 utilisant le principe de programmation par contrainte sont généralement peu exhaustives. La programmation par contrainte permet en effet de gérer des contraintes très variées, une contrainte pouvant se traduire par toute combinaison des fonctions mathématiques élémentaires. En revanche, dans le cas de la planification de trajectoire les contraintes imposées ne sont généralement pas suffisantes pour que les méthodes courantes d'élagage de l'espace de recherche soient efficaces.

Les méthodes 32 mettant en oeuvre un paradigme espace temps, qui permettent de prendre en compte les obstacles mobiles de manière satisfaisante, sont toutefois d'un maniement très lourd surtout si on essaie d'y introduire des contraintes telles que la présence de zones de vent.

Les méthodes indirectes, plus couramment utilisées et plus performantes, consistent à calculer $\tau$ en deux étapes. Les méthodes indirectes sont fondées sur l'hypothèse que la fonction de coût $\rho$ est décomposable. Cette hypothèse se traduit, en utilisant le formalisme proposé précédemment, par le fait que $\rho$ est considéré comme une composition de fonctions définie par la relation suivante:

$$\rho = \rho_t \circ \rho_x \qquad [3]$$

où $\rho_x$ mesure un coût partiel qui prend en compte uniquement la position des points et $\rho_t$ calcule ensuite le coût total en tenant compte du coût partiel et du temps d'arrivée aux points. Par suite $\rho_x$ et $\rho_t$ sont définies par les relations suivantes:

$$\rho_x : \quad E^2_{valide} \quad \rightarrow \quad [0,+\infty[ \qquad\qquad\qquad [3]$$
$$(x_1,x_2) \quad \alpha \qquad c_x$$

$$\rho_t : \quad [0,+\infty[ \times [0,T]^2 \quad \rightarrow \quad [0,+\infty[ \qquad\qquad [4]$$
$$(c,(t_1,t_2)) \qquad \alpha \qquad c_t$$

Les procédés utilisant des méthodes indirectes mettent principalement en oeuvre deux étapes:

- une étape 33 de Détermination d'un itinéraire optimal, consistant à déterminer entre deux points A et B le trajet $\gamma$ (de longueur *L*) défini par les conditions suivantes:

$$\begin{cases} \gamma : l \in [0,L] \; \alpha \;\; x \in E_{valide} \\ \gamma(0) = A \\ \gamma(L) = B \end{cases} \qquad\qquad [5]$$

et minimisant la fonction de coût partiel $c_p$ défini par:

$$c_P = \int_0^L \rho_x(\gamma(l),\gamma(l+dl))\, dl \qquad\qquad [6]$$

fonction de coût définie relative à la distance séparant les points A et B,

On note ici que cet itinéraire peut être constitué de différents chemins passant par des points intermédiaires, comme c'est le cas pour l'itinéraire suivi par un engin lors d'une mission telle que celle décrite ici.

- une étape 34 de modulation de la vitesse du mobile le long de l'itinéraire optimal calculé lors de l'opération précédente, consistant principalement dans le calcul d'une fonction définie par la relation suivante:

$$\lambda : t \in [0,T] \; \alpha \;\; l \in [0,L] \qquad\qquad [7]$$

et minimisant le coût total du trajet, coût total qui peut être défini par la relation suivante:

$$c_T = \int_0^T \rho_t\big(\rho_x(\gamma \circ \lambda(t), \gamma \circ \lambda(t+dt)), (t,t+dt)\big)dt \qquad [8]$$

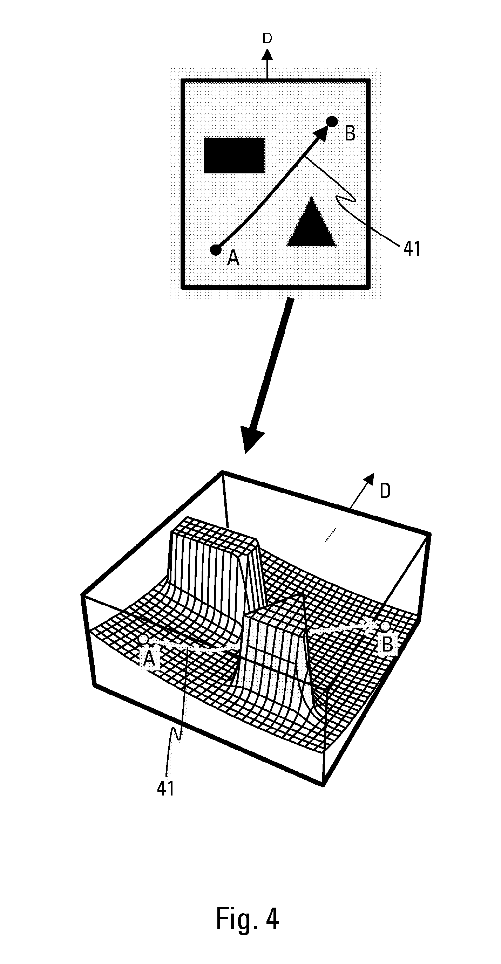

La trajectoire recherchée, le long de l'itinéraire optimal, est alors $\tau = \gamma \circ \lambda$.
Il existe plusieurs types connus de méthodes indirectes permettant déterminer la trajectoire d'un engin mobile. Parmi celles-ci on peut notamment citer la méthode 35 des potentiels artificiels selon laquelle le chemin optimum reliant deux points peut être déterminé en définissant dans l'espace séparant ces deux points un champ de potentiels artificiels qui caractérise pour chaque point de cet espace la distance qui le sépare, en ligne directe, du point but B vers lequel on veut se déplacer. Pour chaque point, ce potentiel est en outre également déterminé en fonction de la possibilité pour le mobile de pouvoir ou non passer par ce point. Ainsi, comme l'illustre la figure 4, le potentiel d'un point est d'autant plus faible que celui-ci est plus proche du point d'arrivée. De même, suivant une telle construction, les points sur lesquels se trouvent positionnés des obstacles sont affectés d'un potentiel très élevé. De la sorte le chemin optimal 41 entre les points de passage A et B est constitué par une succession de points chaque point ayant un potentiel plus faible que le point précédent. Le mobile se déplace ainsi d'un point à l'autre comme guidé par la gravité du lieu.

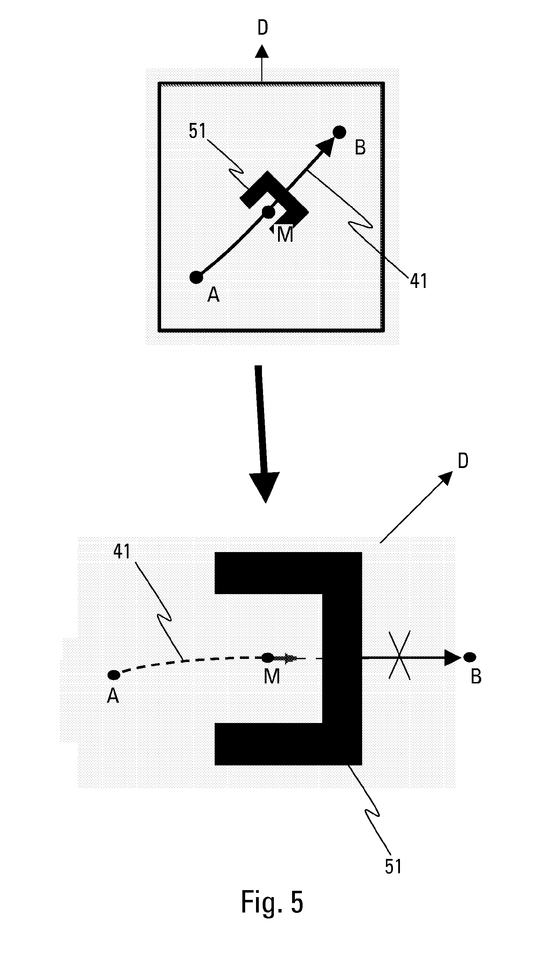

Ce principe de détermination des chemins optimaux présente le double avantage d'être très efficace et d'une mise en oeuvre simple, le chemin optimal étant défini de manière quasi automatique. En revanche, comme le met en évidence l'illustration de la figure 5, il possède dans certains cas, notamment dans le cas de la présence d'un obstacles 51 présentant une concavité, le défaut majeur de conduire l'engin mobile sur un chemin qui, bien que correspondant à une suite de potentiels décroissants, se termine en cul de sac, sans possibilité de retour en arrière. L'extrémité du chemin emprunté par l'engin constituant un minimum local de potentiel, celui-ci se trouve dans l'incapacité de retrouver son chemin. Ce genre de désagrément a entraîné une certaine méfiance vis à vis des procédés utilisant de manière directe ce principe, méfiance qui se traduit par un certain désintérêt des procédés actuels pour ce principe.

Un autre type connu de méthode permettant de déterminer un itinéraire consiste à déterminer cet itinéraire de l'engin à partir du calcul des chemins optimaux qui relient les points de passage de la mission considérée, en effectuant la décomposition cellulaire de l'espace s'étendant entre ces deux points et en définissant pour l'engin une fonction de coût caractérisant le passage d'une cellule donnée vers une des cellules constituant son voisinage. Ce type de méthode auquel se rattache le procédé selon l'invention, représente le type actuellement le plus utilisé, en raison de son caractère exhaustif et de sa simplicité de mise en oeuvre par les calculateurs actuels.

Pour effectuer le calcul des chemins optimaux, les méthodes de détermination indirectes comportent principalement trois étapes.

La première étape 36 consiste à décomposer l'espace $E_{valide}$ dans lequel s'inscrit la mission en un ensemble de régions connexes adjacentes, appelées cellules.

La deuxième étape 37 consiste à définir des relations d'adjacence entre cellules ces relations étant matérialisées par un graphe appelé "graphe de connectivité".

La troisième étape 38 consiste à effectuer une recherche dans le graphe de connectivité pour trouver le chemin optimal permettant de relier deux points de passage ensemble.

L'étape 36 de décomposition en cellules peut être implémentée de différentes manières connues. Parmi celles-ci on distingue les méthodes de décomposition exactes, et les méthodes de décomposition approchées. Ces deux familles de méthodes ont pour objet de décomposer l'espace $E_{valide}$ en cellules permettant de différentier les zones où l'engin peut circuler librement des zones contenant un obstacle que l'engin doit contourner et de déterminer parmi les zones libres celles permettant d'obtenir le trajet le plus court.

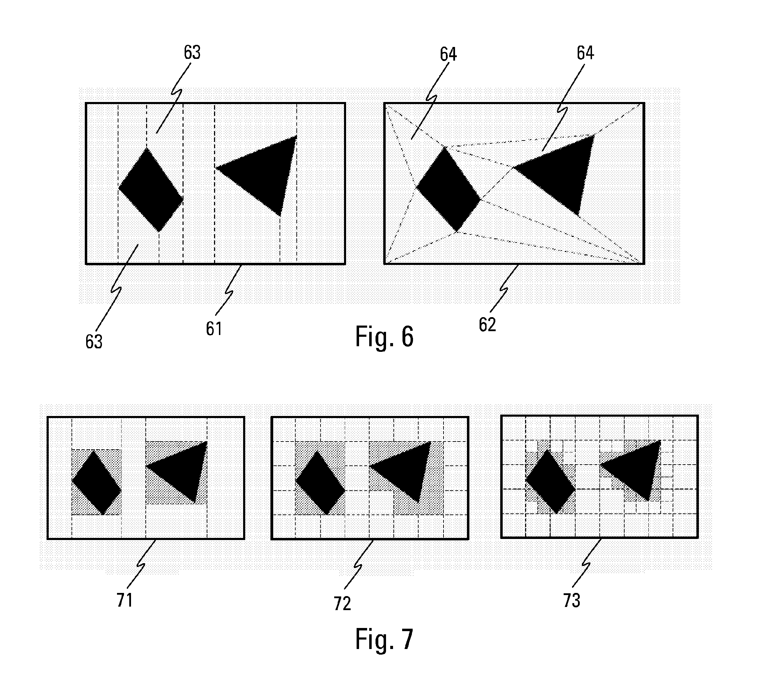

Les méthodes de décomposition exactes ont pour objet de définir des cellules qui circonscrivent exactement les contours des obstacles. La figure 6 illustre deux exemples simples 61 et 62 de décompositions exactes définissant respectivement des cellules trapézoïdales 63 et des cellules triangulaires 64. Ces méthodes exactes; non développées ici, présentent l'avantage de procéder à un recouvrement complet de l'espace. De la sorte il est possible de définir des chemins optimaux passant au plus près des obstacles. En revanche, elles présentent l'inconvénient de définir des cellules de tailles différentes, ce qui rend complexe la comparaison automatique des chemins permettant de relier deux points de passage et donc de déterminer lequel de ces chemins constitue le chemin optimal. Le choix du passage par un chemin plutôt que par un autre doit en effet dans ce cas tenir compte des tailles respectives des cellules traversées.

Les méthodes de décomposition approchées, quant à elles, procèdent de manière plus simple par décomposition de l'espace en cellules élémentaires identiques. Les cellules sont généralement de forme simple, rectangulaire, ou carrée, et réalisent un recouvrement partiel de l'espace $E_{valide}$. On parle ici de recouvrement partiel car la surface occupée par les différents obstacles est approximée par excès par juxtaposition de cellules élémentaires. De la sorte dans les méthodes de décomposition approchées, comme l'illustre la figure 7, les surfaces occupées par les obstacles sont approximées par une ou plusieurs cellules. Chaque cellule ou groupe de cellule couvre une surface au moins égale, et généralement supérieure à la surface réellement occupée par l'obstacle considéré. De sorte que le chemin optimal calculé ne passe pas aussi près des obstacles rencontrés que dans le cas d'une décomposition exacte ce qui peut induire un léger allongement de trajet. Cependant, au prix de ce léger inconvénient, les méthodes de décomposition approchées se trouvent être d'une mise en oeuvre simple et performante. Ces pourquoi les procédés de planifications actuels utilisent majoritairement ce type de décomposition plutôt qu'une décomposition exacte.

La figure 7 présente trois exemples 71, 72 et 73 de décompositions approchées en cellules rectangulaires de tailles différentes (71) ou identiques (72 et 73).

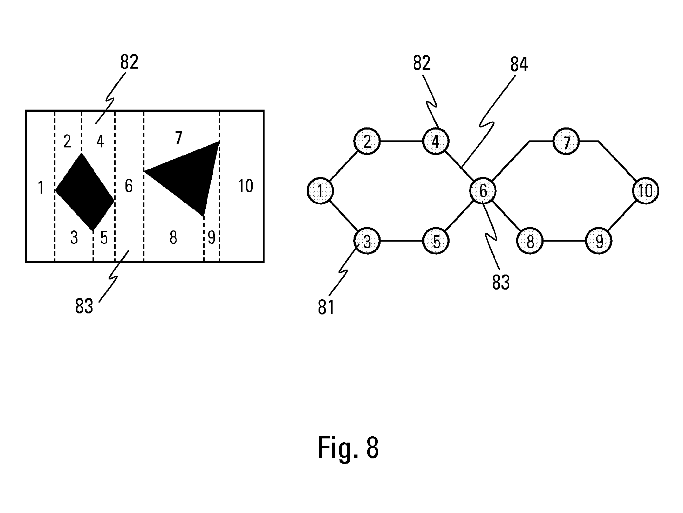

L'étape de construction du graphe de connectivité consiste à représenter l'ensemble des cellules définies à l'étape précédente et les relations de continuité existant entre les différentes cellules. Comme l'illustre la figure 8 à partir de l'exemple 61 de décomposition exacte, présenté sur la figure 6, ce graphe peut être matérialisé par un ensemble de noeuds 81 modélisant chaque cellule, deux cellules 82, 83 présentant une continuité étant reliées par un segments de droite 84.

L'étape de recherche 38 dans le graphe de connectivité consiste quant à elle à rechercher pour chaque chemin allant d'un noeud A à un noeud B, noeuds figurant des points de passage, le trajet optimal présentant le coût le plus faible. Ce coût est directement fonction des coûts de passage de cellule à cellule le long du chemin considéré, c'est pourquoi il est nécessaire de déterminer le coût de passage d'une cellule à l'autre. Le chemin optimal est alors défini comme étant le chemin passant par les cellules permettant d'obtenir le coût le plus faible.

Par suite, la construction des itinéraires permettant à l'engin de se rendre du point de départ au point d'arrivée, est réalisée en associant, de manière optimale, les différents chemins optimaux entre eux, l'association optimale étant définie comme celle occasionnant le coût de passage total el plus faible. L'itinéraire optimal permettant de remplir la mission assignée, est ainsi déterminé en évaluant pour chaque itinéraire le coût global associé et en retenant l'itinéraire correspondant à l'évaluation la plus faible. Pour effectuer cette évaluation on utilise généralement des algorithmes de recherche classiques, comme par exemple l'algorithme A* ou l'une des ses variantes connues comme l'algorithme "Anytime dynamic A*" Ces algorithmes couramment mis en oeuvre par les procédés de planifications actuels ne sont pas décrits en détail ici.

Comme il a été dit précédemment, dans la majorité des procédés utilisant des méthodes indirectes, l'étape de détermination d'un itinéraire optimal est complétée par une étape de modulation de la vitesse de l'engin le long de l'itinéraire déterminé. Cette étape à pour objet de déterminer la vitesse de déplacement optimale de l'engin le long de l'itinéraire déterminé. La détermination de la vitesse optimale est une opération particulièrement avantageuse qui permet d'éviter que l'engin n'entre en collision avec un obstacle mobile au cours de son déplacement et qui permet simultanément d'optimiser le temps de trajet de l'engin le long de l'itinéraire choisi.

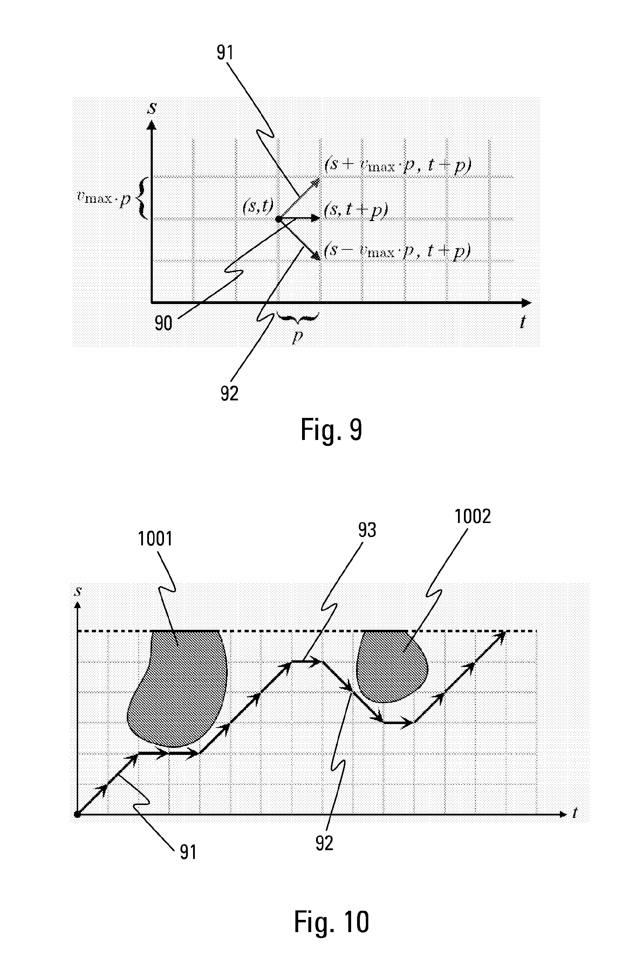

Une méthode connue et relativement répandue pour moduler, de manière optimale, la vitesse de l'engin, consiste à construire un espace-temps à deux dimensions tel que celui illustré par la figure 9. L'une des dimensions est l'abscisse curviligne $s$ parcourue sur la trajectoire $\gamma$, l'autre le temps t écoulé depuis l'instant $t_0$ de départ de l'engin. Généralement, le temps écoulé est discrétisé à l'aide d'un pas constant p = $\Delta$t.

Selon cette méthode, durant chaque incrément (intervalle $\Delta$p) de temps, trois déplacements sont envisagés :

- une progression en avant 91, à vitesse maximale,
- une progression en arrière (recul) 92, à vitesse maximale,
- une suspension 93 de la progression (immobilisation de l'engin).

Comme l'illustre la figure 10, Cette méthode connue permet de définir de manière automatique et simple, en utilisant cette représentation à deux dimensions, l'évolution de la vitesse de progression de l'engin le long de sa trajectoire, en fonction de la présence d'obstacles à des instants déterminés. L'utilisation de seulement trois états de vitesse possibles permet en outre de limiter le nombre de configurations position-vitesse à analyser. Cette méthode permet ainsi d'obtenir dans un délai suffisamment court, une planification de trajectoire incluant une possibilité de moduler la vitesse de progression de l'engin.

Cependant une telle méthode, qui anticipe peu la survenue d'une éventuelle collision avec des obstacles mobiles 1001 et 1002, suppose, comme l'illustre la figure 10, que l'engin soit capable non seulement de rester stationnaire mais aussi de progresser à rebrousse chemin, de manière quasi instantanée. Or tel n'est pas toujours le cas, notamment lorsque l'engin considéré est un aéronef de type drone par exemple. Elle ne constitue pas une méthode réellement applicable à tous les types de missions.

Ainsi, comme cela a été exposé, on dispose donc à l'heure actuelle, de procédés relativement simples et performants, pour réaliser la planification automatique d'itinéraires par détermination indirecte et qui mettent en oeuvre une étape de calcul de chemins optimaux pour relier les points de passage entre eux dans un ordre compatible avec les contraintes de la mission à effectuer. Cette étape de calcul est de manière connue réalisée par décomposition approchée de l'espace en cellules élémentaires de préférence identiques, de forme rectangulaire et par analyse du graphe de connectivité correspondant. Ces procédés, mettent en outre généralement en oeuvre une étape complémentaire de modulation de la vitesse de l'engin le long des chemins optimaux de façon à prendre en compte la présence d'obstacles mobile éventuels durant les instants où l'engin parcourt ces chemins et à optimiser la consommation de l'engin et/ou la durée de la mission.

Quoique avantageux, ces procédés qui mettent en oeuvre diverses méthodes connues de l'art antérieur présentent des limitations qui altèrent leur efficacité dans certaines configurations données, ou encore pour certains types d'engins.

Parmi ces limitations on peut citer celle relative aux chemins optimaux. En effet, en ce qui concerne le calcul des chemins optimaux, les méthodes connues citées précédemment présentent un caractère systématique qui conduit par exemple à une décomposition complète de l'espace $E_{valide}$ en cellules et l'analyse des chemins possibles correspondant permettant de joindre les noeuds du graphe les uns aux autres. Ainsi, dans le cas où il existe beaucoup d'obstacles dans l'espace considéré, l'étude systématique des chemins possibles peut s'avérer extrêmement pénalisante en terme de quantité de calculs.

Parmi ces limitations on peut également citer la manière dont est modulée la vitesse de l'engin. En effet, la modulation de la vitesse de l'engin sur un nombre de valeurs définies a priori, peut s'avérer constituer une entrave à une recherche de la meilleure trajectoire, recherche que l'on souhaite la plus rapide possible de façon à conserver un caractère dynamique.

Une autre limitation est constituée par la manière dont est effectué le calcul des chemins optimaux. Celui-ci étant réalisé à partir d'une simple décomposition de l'espace en cellules élémentaires, une réactualisation dynamique de l'itinéraire de l'engin, consécutive par exemple à l'introduction d'un nouvel obstacle fixe non prévu initialement et qu'il devient impératif de contourner, entraîne nécessairement de relancer le procédé dans son intégralité et d'en parcourir une nouvelle fois toutes les étapes. De la sorte un procédé utilisé pour ses performances avantageuses en ce qui concerne la planification initiale de la trajectoire d'un engin devant accomplir une mission donnée, peut s'avérer trop lourd en terme de charge de calcul pour permettre une réactualisation en temps réel de cet itinéraire.

Enfin, parmi ces limitations, on peut également constater que ces procédés ne permettent pas d'introduire de manière naturelle les contraintes spécifiques constituées par la nécessité de prendre en compte des zones de vent à l'intérieur desquelles le vent souffle à une vitesse donnée et dans une direction déterminée par nécessairement favorable à la progression de l'engin. La prise en compte du vent constitue généralement dans les procédés actuellement exploités une étape complémentaire compliquée car apparaissant de manière très tardive dans le processus de détermination de l'itinéraire de l'engin.

PRESENTATION DE L'INVENTION

Un but de l'invention consiste à proposer un procédé permettant de déterminer de manière automatique, rapide et dynamique une trajectoire optimale permettant à un engin, en particulier à un drone, d'effectuer une mission consistant à se rendre en des lieux déterminés durant des intervalles de temps donnés en tenant compte de l'autonomie de l'engin et de contraintes diverses comme des obstacles fixes à contourner ou des obstacles mobiles à éviter ou encore comme des perturbations venteuses localisées.

A cet effet l'invention a pour objet un procédé pour planifier la trajectoire d'un engin en mission dans un espace donné comportant des obstacles, ladite mission, d'une durée donnée, imposant des points de passages, des contraintes sur l'ordre de passage sur ces points et des contraintes sur les intervalles de temps durant lesquels l'engin doit passer sur certains points de passage, caractérisé en ce qu'il comporte:

- une étape de calcul des chemins optimaux reliant les différents points de passage deux à deux, un chemin optimal correspondant au temps de parcours le plus faible entre deux points donnés,
- une étape de détermination d'un itinéraire optimal à partir des chemins optimaux calculés, l'itinéraire optimal étant défini comme une association, dans un ordre défini répondant aux contraintes de la mission, de chemins optimaux permettant d'aller du point de départ au point d'arrivée dans un temps compatible de la durée de la mission,
- une étape de modulation de la vitesse de l'engin le long de l'itinéraire optimal déterminé, pour prendre en compte la présence d'obstacles mobiles dont la trajectoire coupe l'itinéraire optimal déterminé.

Selon l'invention, lequel l'étape de calcul des chemins optimaux comporte:

- une étape de décomposition approchée de l'espace $E_{valide}$ en cellules élémentaire, d'affectation à chaque cellule d'intérêt d'un potentiel artificiel défini par propagation d'un front d'onde de potentiel depuis chaque cellule contenant un point de passage
- une étape de calcul des chemins optimaux proprement dite, le calcul de chaque chemin étant réalisé en parallèle à partir de la propagation d'un front d'onde de potentiel depuis chaque cellule contenant un point de passage et des cellules pour lesquelles des collisions entre les fronts d'ondes se produisent, chaque chemin optimal étant calculé à partir des tronçons de chemins optimaux reliant les deux points de passage considérés au point de collision des fronts issus des ces deux points de passage.

Selon l'invention, le potentiel attribué à chaque cellule est calculé de proche en proche depuis la cellule à l'origine du front correspond, le potentiel de chaque cellule étant déterminé par la distance euclidienne la séparant des huit cellules environnantes constituant le voisinage de Moore de la cellule considérée.

Selon une variante de l'invention, le calcul du chemin optimal reliant deux points de passage est déterminé par "surfing". Selon une autre variante, le calcul du chemin optimal est réalisé en mémorisant, pour chaque cellule, la cellule ayant servi à déterminer son potentiel; le chemin optimal traversant la succession des cellules constituant la chaîne de cellules reliant les cellules correspondant aux points de passage considérés

Selon l'invention encore l'étape de détermination d'un itinéraire optimal est réalisée en mettant en oeuvre un algorithme associant un algorithme de recherche de type A* avec une Heuristique prenant en compte, pour chaque itinéraire considéré, le temps de parcours minimum pouvant être réalisé depuis chaque point de passage.

Selon une variante de mise en oeuvre, l'algorithme de recherche prend en compte un paramètre constituant un contrat de temps d'exécution.

Selon une variante de mise en oeuvre de l'invention, l'étape de modulation de la vitesse de l'engin le long de l'itinéraire optimal est réalisée met en oeuvre l'algorithme de "l'alpiniste".

Selon une autre variante de mise en oeuvre de l'invention, l'étape de modulation de la vitesse de l'engin le long de l'itinéraire optimal est réalisée met en oeuvre l'algorithme des "lignes brisées".

DESCRIPTION DES FIGURES

Les caractéristiques et avantages de l'invention seront clairement présentés dans la description qui suit, description faite en regard des figures annexées qui présentent:

- la figure 1, la représentation graphique du contexte d'un exemple simple de mission,
- la figure 2, Un diagramme figurant l'ensemble des trajets intermédiaires possibles permettant de remplir la mission de la figure 1 en respectant les contraintes imposées sur les différents points passage,
- la figure 3, une illustration présentant les différents types de méthodes de planification,
- les figures 4 et 5, des illustrations schématiques relatives à la méthode dite "des potentiels artificiels",
- les figure 5-a et 5-b, des illustrations de deux manières, prises comme exemples, de réaliser une décomposition exacte de l'espace $E_{valide}$ en cellules,
- la figure 6, une illustration relative au principe de décomposition exacte de l'espace $E_{valide}$.
- la figure 7, l'illustration du principe de décomposition approchée au travers de trois exemples particuliers,
- la figure 8 la représentation d'un exemple simple de graphe de connectivité,
- les figures 9 et 10, L'illustration d'une méthode pour moduler, sur trois états, la vitesse de l'engin le long de son trajet et de son application dans un repère espace-temps,
- les figure 11 à 13, l'illustration sur un exemple simple d'une première méthode de décomposition approchée de l'espace $E_{valide}$ en cellules élémentaires identiques, chaque cellule de l'espace étant affectée d'un potentiel défini par la distance de Manhattan qui la sépare de la cellule du point d'arrivée,
- la figure 14, l'illustration d'une première méthode pour construire un chemin optimal entre deux points de passage, cette méthode mettant en oeuvre un algorithme de "surfing",
- la figure 15, l'illustration de la méthode selon l'invention, utilisée pour construire un chemin permettant de relier deux points de passage, par exploitation du lien de dépendance reliant une cellule à la cellule ayant permis de déterminer son potentiel,
- les figure 16 et 17, l'illustration sur un exemple simple d'une deuxième méthode de décomposition approchée de l'espace $E_{valide}$ en cellules élémentaires identiques, chaque cellule de l'espace étant affectée d'un potentiel défini par la distance euclidienne qui la sépare de la cellule du point d'arrivée.
- la figure 18, L'illustration schématique d'un exemple simple de mission comportant quatre points de passage, au travers d'un diagramme figurant les trajets possibles entre les différents points de passage.
- la figure 19, l'illustration du principe de fonctionnement de la méthode selon l'invention utilisée pour construire les chemins optimaux reliant les différents points de passage, en exploitant la collision de fronts d'ondes issus de chacun des points de passage,
- la figure 20, l'illustration du principe, selon l'invention, de construction d'un chemin optimal à partir des cellules correspondant aux points de collision de fronts d'ondes,
- la figure 21, L'illustration d'une méthode selon l'invention, pour affecter à chaque cellule un potentiel fonction du temps de trajet nécessaire pour se rendre de cette cellule à la cellule but considérée,
- la figure 22, l'illustration de la propagation au cours du temps d'un front d'onde de potentiels, les potentiels étant déterminé par la méthode de la figure 21,
- la figure 23, L'illustration schématique d'un exemple simple de mission comportant cinq points de passage, au travers d'un diagramme figurant les trajets possibles entre les différents points de passage, chaque trajet étant caractérisé par le temps de parcours correspondant au chemin optimal,
- la figure 24, la représentation schématique de l'ensemble des états possibles (abscisse curviligne, temps) pour un engin devant exécuter un d'un exemple simple de mission,
- les figures 25, l'illustration d'une première méthode selon l'invention pour optimiser l'évolution de la vitesse de progression de l'engin le long de l'itinéraire choisi pour remplir la mission, Cette méthode utilisant un algorithme dit "de l'alpiniste",
- les figures 26 à 29, l'illustration d'une deuxième méthode selon l'invention pour optimiser l'évolution de la vitesse de progression de l'engin le long de l'itinéraire choisi pour remplir la mission, Cette méthode utilisant l'algorithme de construction par lignes brisées,

DESCRIPTION DETAILLEE

La suite de la description présente au travers d'exemples simples de mission, les caractéristiques techniques avantageuses du procédé selon l'invention. Ces exemples, nullement limitatifs, ont pour objet de rendre la présentation des différentes étapes du procédé selon l'invention claire et aisément accessible à l'homme du métier, en présentant en particulier les forme préférées de mise en oeuvre.

Si l'on reprend l'architecture du procédé telle qu'elle a été présentée précédemment, on constate que celui-ci entre dans la catégorie des méthodes indirectes, procédant par décomposition approchée de l'espace $E_{valide}$ en cellules élémentaires identiques. Cependant, il présente des caractéristiques techniques qui le différentient des procédés existants.

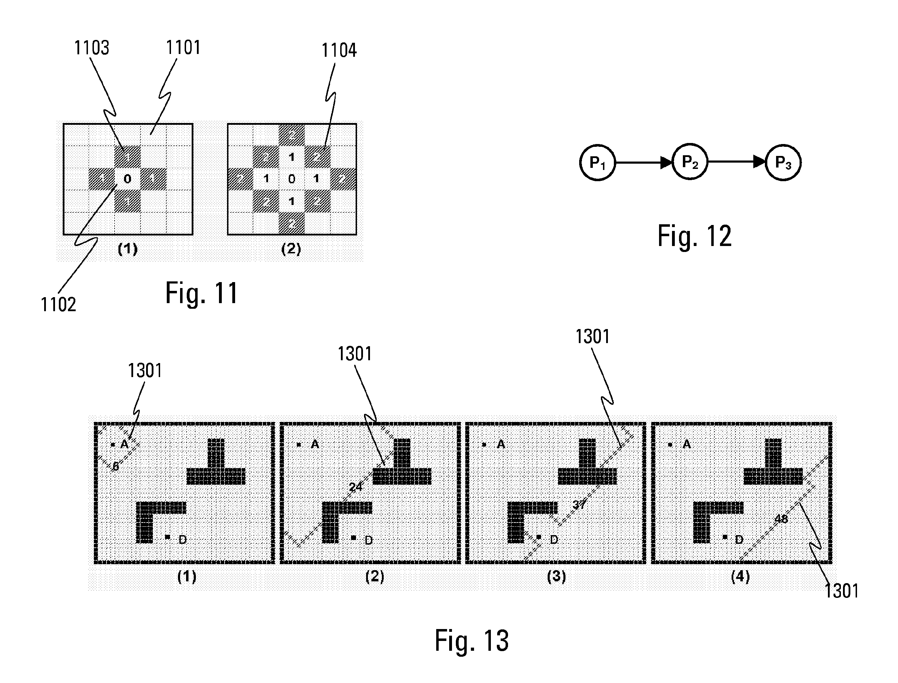

On s'intéresse d'abord aux figures 11 à 15, qui permettent de présenter de manière simple le principe général sur lequel se base le procédé selon l'invention pour de déterminer des chemins optimaux reliant les différents points de passage imposés à l'engin par la mission.

La figure 11 illustre un premier procédé connu de décomposition approchée de l'espace $E_{valide}$ en cellules élémentaires 1101 identiques.

Selon ce procédé, les cellules ainsi définies sont affectées de potentiels artificiels. Pour chaque cellule on définit autant de potentiel qu'il y a de trajet possible entre deux points de passage. De la sorte une même cellule peut être affectée d'un potentiel $p_1$ pour l'étude du trajet reliant un point A et un point B, et d'un potentiel $p_2$ pour l'étude du trajet reliant le même point A et un point C.

Ainsi pour une mission donnée on peut par exemple, comme l'illustre le diagramme élémentaire de la figure 12, compter trois points de passage $P_1$, $P_2$ et $P_3$ et une condition qui impose le ralliement de ces points selon les trajets partiels "$P_1$ vers $P_2$" et "$P_2$ vers $P_3$". Chaque trajet partiel est défini par un point de départ (respectivement $P_1$ et $P_2$) et un point d'arrivée ou "point but" (respectivement $P_2$ et $P_3$).

Selon ce premier procédé connu, les potentiels affectés à une cellule donnée sont fonctions de la distance qui sépare cette cellule des cellules contenant les points définis comme points buts. Ainsi, dans l'exemple précédent chaque cellule sera affectée d'un potentiel relatif au point $P_2$ et d'un potentiel relatif au point $P_3$. La distance considérée ici est la distance de Manhattan qui s'exprime en nombres entiers de cellules.

Pour affecter ces potentiels on procède par ailleurs, comme l'illustre la figure 11, de la façon suivante:

On fixe d'abord le potentiel de la cellule but 1102 considérée à 0. Par cellule but, on entend ici une cellule à l'intérieur de laquelle se trouve localisé un point but. On récupère ensuite le voisinage de la cellule but et on affecte aux cellules constituant ce voisinage un potentiel de valeur 1. Ce voisinage, au sens de Von Neumann, est constitué des cellules 1103 voisines de la cellule but, ayant avec cette dernière au moins un coté commun. Cet ensemble constitue ce que l'on peut considérer comme une ligne équipotentielle de valeur 1. On construit ensuite, à partir de la cellule but les équipotentielles 1104 suivantes par une démarche récurrente qui s'apparente à la propagation d'un front d'onde de potentiel. Ainsi, en partant de la ligne équipotentielle de valeur U, on fait se propager le front d'onde aux cellules non encore affectées d'un potentiel et situées au voisinage des cellules constituant cette équipotentielle. Les cellules atteintes par le front d'onde se voient attribuer une valeur de potentiel égale à U + 1. On constitue ainsi l'équipotentielle de valeur U+1.

Cette opération de construction est ainsi répétée de proche en proche jusqu'à ce que toute les cellules constituant l'espace considéré aient été affectées d'un potentiel. Les potentiels affectés aux cellules correspondent ici, comme il a été dit précédemment, à la distance de Manhattan, comptée en nombres entiers de cellule, qui sépare une cellule de la cellule but considérée, la cellule contenant $P_2$ ou celle contenant $P_3$ dans l'exemple précédant.

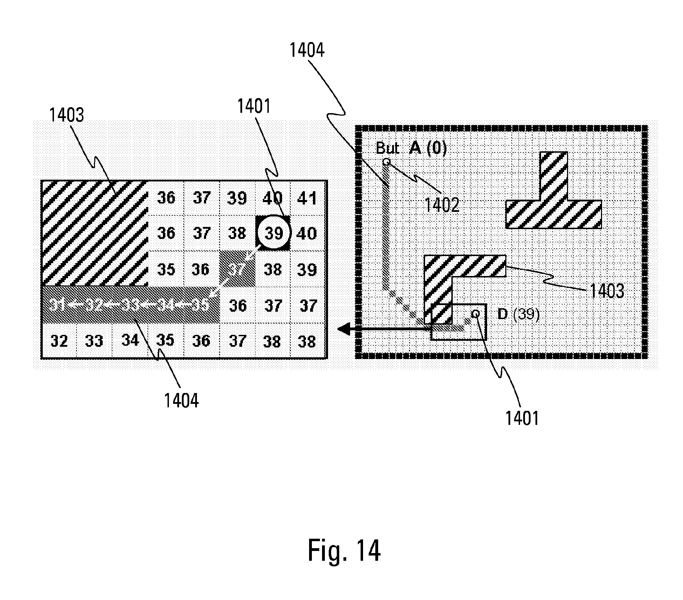

La figure 13 illustre ce principe de construction de proche en proche des courbes équipotentielles, par propagation d'un front d'onde. Dans l'exemple illustré par la figure on voit se propager à l'ensemble de l'espace $E_{valide}$ le front d'onde 1301 issu d'une cellule but. Le processus de propagation s'arrête ici lorsque l'ensemble des cellules ayant été affectées d'un potentiel, il n'y a plus d'équipotentielle à développer.

Il est à noter que selon ce procédé connu, la prise en compte des obstacles est prise avantageusement en compte de manière automatique. En effet selon ce procédé, les cellules recouvrant des obstacles ne sont pas explorées et sont affectées de potentiels infinis.

Chaque cellule étant affectée, pour chaque cellule but, d'un potentiel, l'étape d'estimation d'un chemin optimal en distance, permettant de relier une cellule donnée à une cellule but donnée, consiste principalement à rechercher un trajet passant par une succession de cellules, les cellules composant le trajet étant déterminées de façon à ce que le potentiel des cellules traversées décroisse de manière continue depuis la cellule de départ vers la cellule but.

Cette recherche peut être réalisée avantageusement de manière systématique en utilisant par exemple un procédé appelé "surfing". Ce procédé consiste à progresser de cellule en cellule, depuis la cellule considérée vers la cellule but.

Le cheminement est effectué en se déplaçant de manière itérative d'une cellule donnée vers la cellule du voisinage présentant le potentiel le plus faible parmi toutes les cellules constituant ce voisinage. Ce potentiel étant par construction plus faible que celui de la cellule d'où l'on vient, la progression ainsi réalisée s'accompagne bien d'une décroissance continue du potentiel pour conduire finalement à la cellule but dont le potentiel est nul par définition. Ce principe de détermination par surfing est illustré par la figure 14 qui présente la construction du chemin optimum 1404 ( le plus court) reliant une cellule 1401 à une cellule but 1402, ce chemin prenant en compte le contournement d'un obstacle 1403.

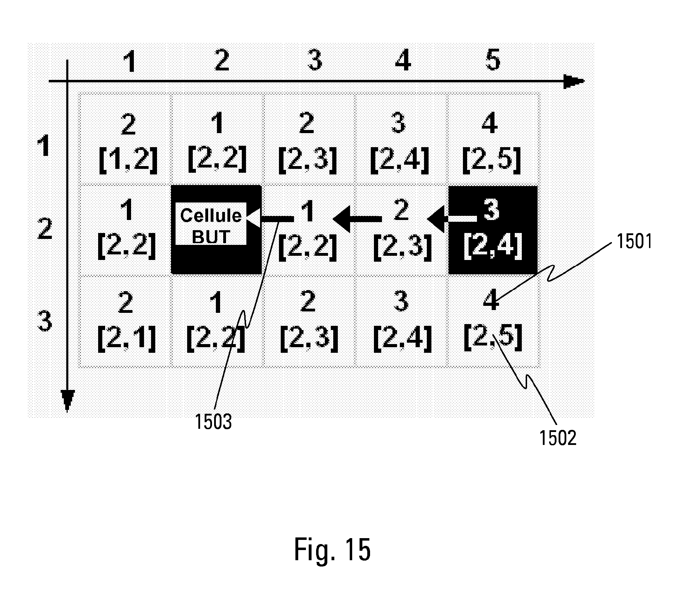

Cette recherche du chemin optimal effectuée de manière connue au moyen d'un algorithme de surfing peut être effectuée, de manière encore plus avantageuse, en exploitant différemment, conformément à l'invention, les résultats de l'opération de détermination du potentiel affecté à chacune des cellules. Selon l'invention ces résultats sont utilisés pour réaliser un maillage particulier de l'espace $E_{valide}$. Cette méthode de maillage consistant, comme l'illustre la figure 15 qui reprend un détail de la figure 14, à mémoriser, pour chaque cellule, la cellule ayant servi à déterminer son potentiel. Comme l'illustre la figure 15, la représentation de l'espace $E_{valide}$ est alors légèrement modifiée par rapport à celle de la figure 11 en ce sens que pour chaque cellule, excepté pour la cellule but, on dispose maintenant du potentiel 1501 de la cellule ainsi que des coordonnées 1502 de la cellule ayant permis de déterminer ce potentiel. Les cellules sont ainsi chaînées les unes aux autres par des relations de filiation. Par suite chaque cellule étant identifiée par la cellule qui a permis de déterminer son potentiel, le chemin optimal, symbolisé par des flèches sur la figure, est implicitement défini comme étant celui qui traverse la succession des cellules constituant la chaîne de cellules reliant ladite cellule et la cellule but. Avantageusement aucune opération d'analyse de voisinage n'est alors plus nécessaire. Sur la figure ce chemin est symbolisé par des flèches 1503.

La décomposition de l'espace $E_{valide}$ en cellules élémentaires 1101 toutes identiques, chaque cellule étant affectée d'un potentiel, présente plusieurs avantages. En particulier on peut mentionner le fait que l'affectation à chaque cellule d'une valeur de potentiel comptée depuis la cellule but permet avantageusement d'éviter la constitution de minima locaux de potentiel; minima locaux qui comme dans le cas de la méthode, évoquée précédemment (cf figure 5), consistant à définir un champ de potentiel artificiel, peuvent conduire à construire des chemins qui s'avèrent être finalement des impasses. En outre, ce principe est d'une complexité raisonnable et la charge de calcul qu'il suppose croît de manière simplement linéaire avec le nombre de cellules. La complexité n'est par ailleurs pas fonction du nombre ou de la forme des obstacles à prendre en compte. Enfin, on peut noter que ce procédé de décomposition en cellules et d'affectation d'un potentiel à chacune des cellules est un algorithme évolutif, de sorte qu'il est par exemple possible de définir un potentiel de nature plus complexe qu'une simple distance de Manhattan et de prendre ainsi en compte des contraintes diverses.

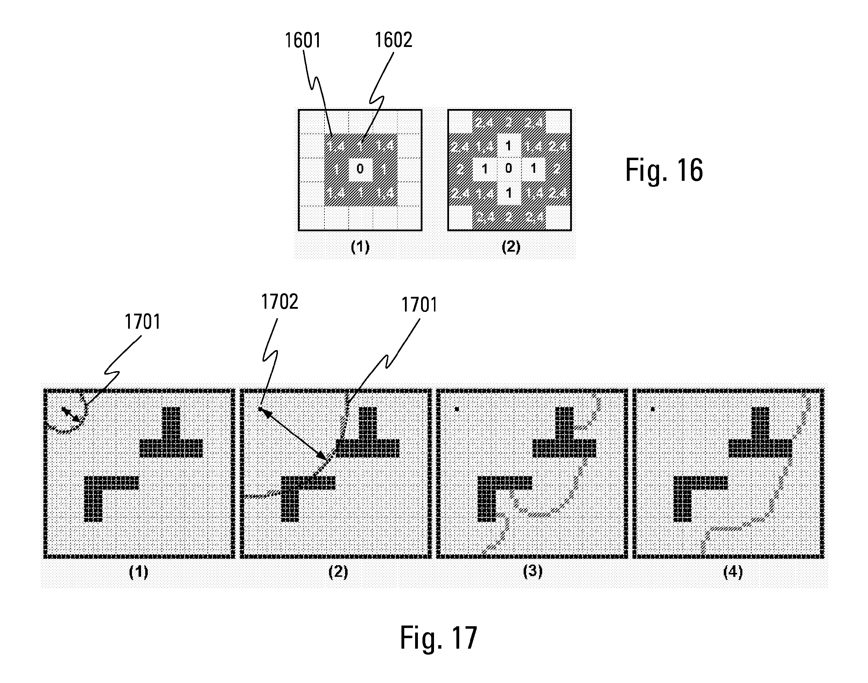

On s'intéresse à présent aux figures 16 et 17 qui illustre une variante avantageuse du procédé décrit précédemment. Cette variante avantageuse constitue un procédé dont les étapes sont connues mais dont l'exposé permet de mettre en évidence, de manière plus directe, certaines caractéristiques avantageuses du procédé selon l'invention. Comme l'illustre la figure 16, ce deuxième procédé diffère du procédé décrit précédemment en ce que les potentiels affectés aux différentes cellules de l'espace $E_{valide}$ correspondent non plus à une distance de Manhattan mais à une distance euclidienne cumulée. Le potentiel attribué à une cellule donnée permet en outre ici de calculer le potentiel attribué aux cellules situées dans un voisinage de Moore constitué par les huit cellules environnantes. Dans ce voisinage chaque cellule 1601 située sur une diagonale de la cellule considérée se voit ainsi attribuer un potentiel égal au potentiel de cette cellule majoré de 1;4 (approximation de $\sqrt{2}$). Alors que les cellules 1602 situées sur une médiane de la cellule se voient ainsi attribuer un potentiel égal au potentiel de cette cellule majoré de 1.

Cette variante du procédé précédent présente le léger inconvénient d'introduire, en utilisant une distance euclidienne, une légère complexification du mécanisme de propagation des fronts d'onde. Cette distance introduit une petite difficulté dans le développement des fronts d'ondes qui de la sorte ne correspondent plus exactement à des courbes équipotentielles, comme le montre la figure 17. Dès lors, il faut trier les cases du front d'onde par valeur de potentiel pour calculer le front d'onde suivant. En revanche, elle présente le gros avantage de constituer une estimation plus exacte de la distance séparant une cellule de la cellule but considérée. En effet la distance de Manhattan, simple à manipuler, ne donne qu'une idée grossière, exprimée en nombres entiers de cellules, de la distance parcourue. Or, en considérant la figure 11, on peut constater que la distance parcourue sur la diagonale d'une cellule de coté 1 est de 2. Or, de manière connue, la distance réellement parcourue est $\sqrt{2}$. Cette mauvaise approximation conduit à accumuler une erreur non négligeable sur la distance parcourue à chaque déplacement en diagonale, accumulation qui peut conduire à induire la réalisation de détours injustifiés lors de la détermination du chemin optimum reliant deux points de passage.

Si on considère en outre la figure 17, on constate que les fronts d'onde 1701 ainsi formés présente une forme plus conforme, en l'absence d'obstacle, à une propagation isotrope, représentative de la répartition géographique, sur des cercles concentriques, des cellules situées à une même distance d'une cellule but 1702. On obtient ainsi, en l'absence d'obstacles, des fronts d'onde de forme sensiblement circulaire alors que le procédé précédent conduit à la constitution de fronts rectilignes, comme l'illustre la figure 13.

Chaque cellule étant affectée, pour chaque cellule but, d'un potentiel, l'étape d'estimation d'un chemin optimal en distance, permettant de relier une cellule donnée à une cellule but donnée, consiste principalement, comme dans le cas du procédé décrit précédemment, à rechercher un trajet passant par une succession de cellules, les cellules composant le trajet étant déterminées de façon à ce que le potentiel des cellules traversées décroisse de manière continue depuis la cellule de départ vers la cellule but. Comme pour le procédé précédent, le calcul du chemin optimal reliant une cellule donnée à une cellule but peut être réalisé soit en utilisant une méthode de type "surfing", soit en établissant, conformément à l'invention, un chaînage par filiation entre les différentes cellules.

Les deux procédés décrits précédemment, présentent par rapport aux autres procédés connus de nombreux avantages. Ainsi, ils présentent l'avantage de toujours fournir une solution, si toutefois il en existe une, à la recherche d'un chemin optimal reliant deux points de passage; et ceci, même en présence d'obstacles. Ainsi également, ils permettent d'éviter l'exploration inutile de chemins en culs-de-sac, même en présence d'obstacles de forme concave. Ainsi enfin, ils présentent l'avantage d'être simple à implémenter de manière automatique. En revanche, ils présentent un inconvénient important. En effet l'opération de détermination du potentiel telle qu'elle est décrite dans ce qui précède permet d'attribuer en fonction de la cellule but considérée un potentiel à chaque cellule. Dès lors, si comme dans l'exemple décrit précédemment l'ensemble des trajets à effectuer dans le cadre d'une mission donnée conduit à définir plusieurs points d'arrivée ($P_2$ et $P_3$ dans l'exemple) correspondant chacun à une cellule but, l'opération doit être répétée en considérant à chaque fois une nouvelle cellule but.

Ainsi, dans l'exemple, selon les procédés décrit précédemment, on effectue une première fois l'opération d'affectation d'un potentiel à chacune des cellules de l'espace $E_{valide}$ en prenant la cellule contenant $P_2$ comme cellule but. Puis on effectue une deuxième fois l'opération en prenant la cellule contenant $P_3$ comme cellule but. Par la suite on effectue de la même façon deux fois l'opération de calcul d'un chemin optimal, une première fois pour calculer le chemin optimal permettant de relier $P_1$ à $P_2$ et une deuxième fois pour calculer le chemin optimal permettant de relier $P_2$ à $P_3$. Plus généralement, si l'on considère une situation similaire à celle représentée par le diagramme de la figure 12, mais comportant non pas deux mais k trajets, la détermination des chemins optimaux reliant les points de passage conformément aux contraintes de la mission nécessitera d'effectuer k fois l'opération d'affectation d'un potentiel à chaque cellule de l'espace $E_{valide}$. Dans le cas où le nombre de points de passage est important cette répétitivité, déjà lourde pour un nombre relativement faible de points de passage, peut s'avérer devenir d'une lourdeur incompatible avec une mise en oeuvre dynamique de ces procédés.

Basé sur les principes de décomposition de l'espace $E_{valide}$ en cellules élémentaires et d'affectation d'un ou plusieurs potentiels à chacune des cellules ainsi déterminées, le procédé selon l'invention en porte les caractéristiques avantageuses déjà mentionnées. Cependant, afin d'en atténuer les inconvénients, il apporte les modifications et les ajouts caractéristiques qui sont décrits dans la suite du document.

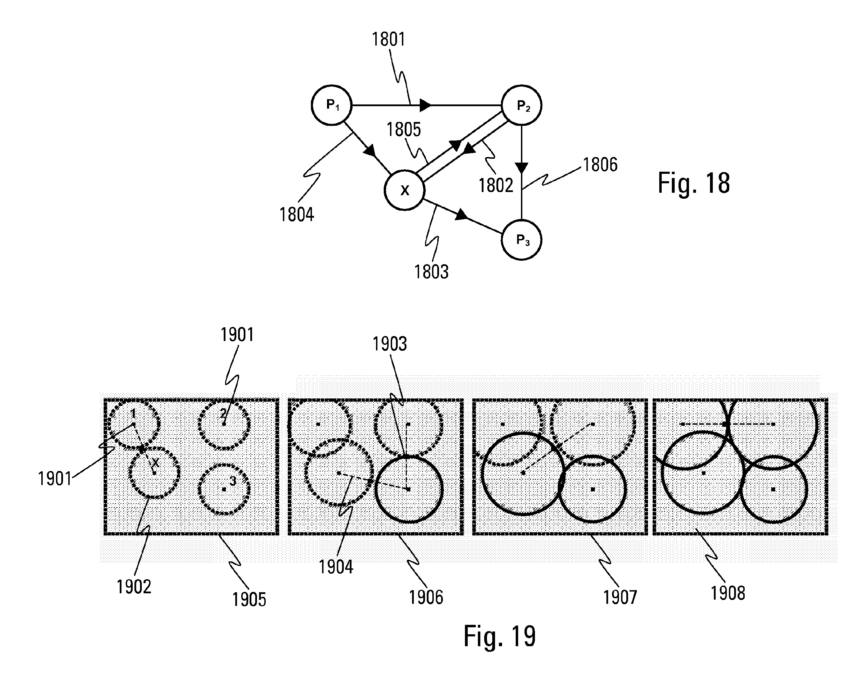

On s'intéresse à présent aux figures 18 à 19.

La figure 18 présente le diagramme représentatif d'une mission, prise comme exemple non limitatif, comportant 4 points de passage, trois points $P_1$, $P_2$ et $P_3$, pour lesquels l'ordre de passage est imposé et un point X dont l'ordre de passage est libre. Dans cet exemple, $P_1$ représente le point de départ de la mission et $P_3$ le point d'arrivée. $P_2$ représente quant à lui un point intermédiaire devant être visité après $P_1$ et avant $P_3$, tandis que le point X peut être visité à n'importe quel moment entre les instants de passage sur $P_1$ et $P_3$ pour peu que cet instant soit compatible des intervalles de temps imposés par la mission. Ces trajets libres ou imposés sont symbolisés sur la figure par les segments fléchés 1801 à 1806. Ainsi dans l'exemple, on constate pour remplir la mission il est possible d'emprunter au choix l'un des deux itinéraires suivants:

- Trajet de $P_1$ à $P_2$, puis trajet de $P_2$ à X, puis trajet de X à $P_3$.
- Trajet de $P_1$ à X, puis trajet de X à $P_2$, puis trajet de $P_2$ à $P_3$.

Pour déterminer le meilleur itinéraire le procédé selon l'invention effectue dans un premier temps, chaque trajet reliant deux points de passage, la recherche d'un chemin optimal. On rappel qu'un chemin optimal est défini ici comme un chemin permettant de rallier les deux points considérés avec le coût de déplacement le plus faible, en tenant compte des obstacles pouvant se présenter sur le trajet entre ces deux points.

Comme dans le cas des procédés décrits précédemment, le procédé selon l'invention procède par décomposition de l'espace $E_{valide}$ en cellules élémentaire auxquelles il affecte des potentiels. En revanche, à la différence des procédés connus, le procédé selon l'invention procède à la détermination parallèle de tous les chemins optimaux et non pas aux déterminations successives des chemins optimaux reliant les points de passage deux à deux.

La figure 19 présente de manière illustrée la méthode originale mise en oeuvre par le procédé selon l'invention. L'illustration présentée à titre d'exemple correspond à l'exemple de mission décrite par le diagramme de la figure 18. L'algorithme mis en oeuvre par le procédé selon l'invention peut être décrit comme suit.

Pour chaque point de passage 1901 pris comme point but, on détermine de proche en proche, d'une façon analogue à celle décrite précédemment, le potentiel de chacune des cellules de l'espace $E_{valide}$. On mémorise également pour chaque cellule dont on détermine le potentiel, les coordonnées de la cellule voisine utilisée pour cette détermination. Cette détermination est réalisée en parallèle pour chaque cellule but, par propagation d'un front d'onde 1902 depuis chaque cellule but. Elle donne lieu à la construction simultanée de courbes équipotentielles partant des différents points de passage. On construit ainsi de proche en proche, pour chaque point de passage, l'ensemble des courbes équipotentielles de sorte que les fronts d'ondes correspondants se propagent et entrent en collision. Les collisions qui se produisent sont détectées et analysées en fonction des points à l'origines des ondes entrant en collision. Les collisions présentant un intérêt sont les collisions 1903 mettant en cause des ondes issues de points liés par un trajet symbolisé par un segment fléché 1904 sur la figure 19 et qui correspond à un des arcs 1801 à 1806 de la figure 18.

Par principe on laisse les ondes se propager jusqu'à ce que toutes les collisions présentant un intérêt se soient produites. Par ailleurs chaque fois qu'une collision présentant un intérêt s'est produite, la cellule se trouvant à l'intersection des deux ondes et constituant la zone de collision est mémorisée. Le processus de propagation d'une onde donnée s'arrête lorsque la totalité des collisions présentant un intérêt la concernant ont eu lieu. A ce moment le processus de détermination des potentiels des cellules non encore explorée est stoppé pour le point origine de cette onde. On procède de la même façon pour toutes les ondes et le processus s'arrête complètement lorsque toutes les collisions présentant un intérêt ont eu lieu et que les cellules correspondantes ont été mémorisées.

Ainsi, si l'on considère la mission de la figure 16, les collisions de fronts d'ondes présentant un intérêt, peuvent être représentée par les cases cochées du tableau suivant.

| origine de l'onde | $P_1$ | $P_2$ | $P_3$ | X |
|---|---|---|---|---|
| $P_1$ |  | ● |  | ● |
| $P_2$ | ● |  | ● | ● |
| $P_3$ |  | ● |  | ● |
| X | ● | ● | ● |  |

Les collisions d'intérêt se produisent à différents instants de la progression des fronts d'onde. A ces instants certains fronts d'ondes entre en collision à l'endroit d'une cellule donnée. Puis selon que cette collision constitue ou non la dernière collision d'intérêt, les fronts d'ondes considérés stoppent leur progression (fronts d'ondes en gris sur la figure) ou la poursuivent (fronts d'onde en noir) jusqu'à une prochaine collision. La figure 19 illustre quatre stades successifs 1905 à 1908 d'évolution des fronts d'onde dans le cas de l'exemple illustré par la figure 16.

Le premier stade 1905 l'instant La figure 16-a correspond à l'état de propagation des fronts d'ondes issues des différents points de passage au moment de la collision des ondes issues de $P_1$ et X. De même, le deuxième stade d'évolution 1906 correspond à l'état de propagation des mêmes fronts d'ondes au moment de la collision des ondes issues de $P_2$ et de $P_3$ d'une part et de X et de $P_3$ d'autre part. De même encore, le troisième stade d'évolution 1907 correspond à l'état de propagation des mêmes fronts d'ondes au moment de la collision des ondes issues de X et de $P_2$. De même enfin, le quatrième stade d'évolution 1908 correspond à l'état de propagation des mêmes fronts d'ondes au moment de la collision des ondes issues de $P_1$ et de $P_2$.

Conformément à ce qui a été dit, cette dernière collision marque l'arrêt du processus. De la sorte, pour les cellules non encore atteintes par un front d'onde, qui correspondent donc, aux cellules situées hors des zones défies par les fronts d'ondes, aucune valeur de potentiel n'est déterminée ce qui permet avantageusement de limiter la quantité d'opération d'affectation d'un potentiel à l'affectation de potentiels aux seules cellules considérées comme utile au calcul des chemins optimaux.

Par suite, l'étape d'affectation de potentiels aux cellules utiles, étant achevée, le procédé selon l'invention met en oeuvre l'étape de détermination des chemins optimaux proprement dite. Selon l'invention la détermination du chemin optimal reliant deux points de passage successifs est réalisée en déterminant les segments de chemin optimaux reliant la cellule correspondant au point de collision des fronts d'ondes issus de ces points, aux cellule contenant ces points de passage. Ces segments de chemin sont déterminés, de manière automatique, en utilisant une méthode de type "surfing" ou bien, de manière plus avantageuse, en utilisant la méthode, décrite précédemment et illustrée par la figure 14 qui consistant à progresser le long de la chaîne de cellule séparant la cellule de collision de cellule correspondant au point de passage considéré.

Par suite le chemin optimal reliant deux points de passage est constitué des deux tronçons de chemins mis bout à bout. Ce chemin passe naturellement par la cellule constituant le point de collision entre les deux fronts d'onde développés à partir des points de passage considérés.

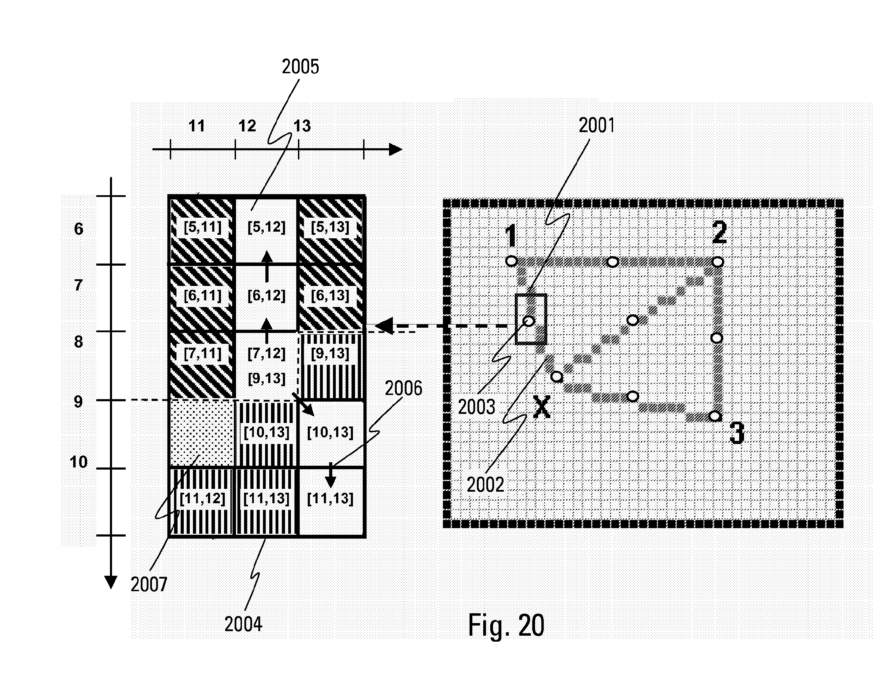

La figure 20 illustre ce principe de détermination par tronçons des chemins optimaux en présentant l'application de ce principe selon l'invention au calcul du chemin optimal permettant de relier le point $P_1$ au point X. comme l'illustre cette figure, chacun des deux tronçons 2001 et 2002 constituant ce chemin est calculé séparément, par chaînage, et le chemin complet est constitué par les deux tronçons mis bout à bout au niveau du point de collision 2003. Comme l'illustre la figure, on constate que l'utilisation de ce procédé de collision ne nécessite effectivement d'affecter un potentiel qu'aux cellules concernées par le calcul du chemin optimal ces cellules se situant dans la zone de l'espace $E_{valide}$ située à l'intérieur du front d'onde considéré. Sur l'agrandissement 2004 ces cellules sont situées dans la zone hachurée verticalement correspondant à la zone située à l'intérieur du front d'onde issu du point X ou dans la zone hachurée en oblique correspondant à la zone située à l'intérieure du front d'onde issu du point $P_1$. Les cellules 2005 dépourvues de fond appartiennent à l'une ou l'autre de ces zones et constituent le chemin calculé, matérialisé par des flèches 2006. Les cellules 2007 présentant un fond pointillé correspondent à des cellules ne présentant pas d'intérêt pour le calcul du chemin optimal entre $P_1$ et X et auxquelles on n'affecte pas de potentiel.

Cette méthode originale mise en oeuvre par le procédé selon l'invention présente, comme cela a été dit précédemment, l'avantage de conserver le caractère simple et systématique présenté par les procédés connus de l'art antérieur décrit précédemment et dont il reprend les principes généraux de décomposition en cellule et d'affectation, à chaque cellule, de potentiels permettant de calculer simplement des chemins optimaux. Cependant, à la différence des procédés connus, cette méthode permet de déterminer de manière simultanée les chemins optimaux reliant tous les points de passage, à partir d'une opération unique de décomposition en cellule, d'affectation d'un potentiel à chaque cellule d'intérêt et de mémorisation pour chacune de ces cellules de la cellule à l'origine de ce potentiel. L'opération d'affectation d'un potentiel étant ainsi limitée aux seules cellules utiles aux calculs des chemins optimaux, le procédé selon l'invention réduit avantageusement, par rapport aux procédés voisins connus, la quantité des opérations nécessaires à un calculateur pour effectuer le calcul de ces chemins.

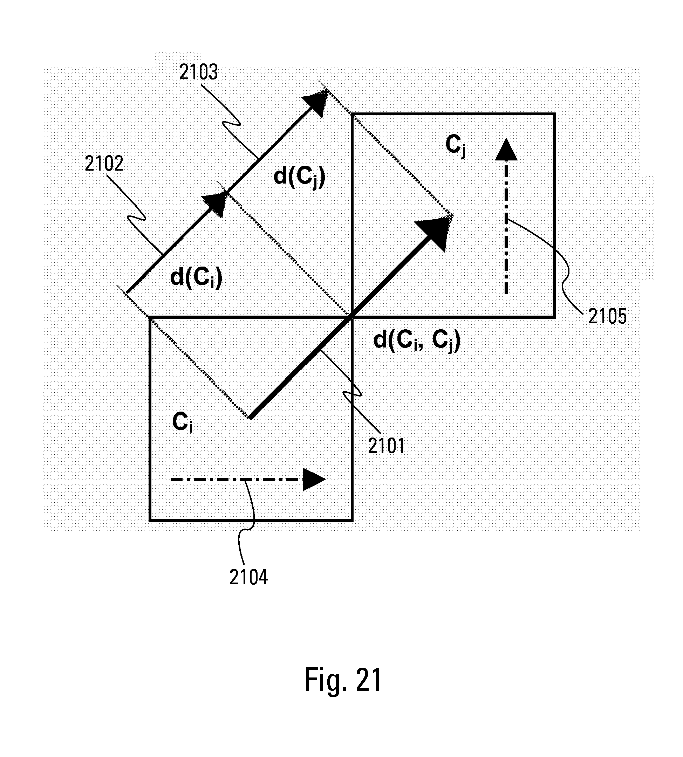

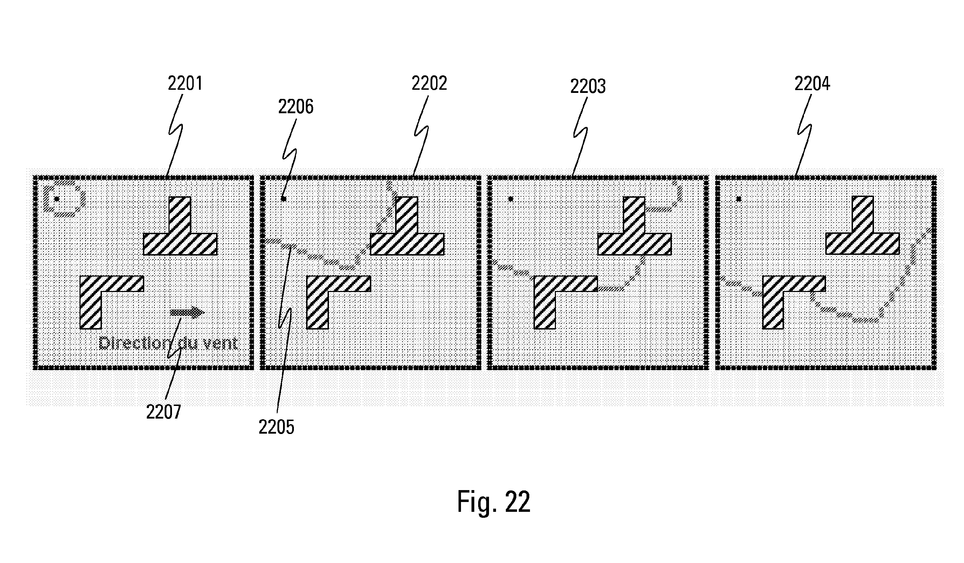

On s'intéresse à présent aux figures 21 et 22 qui illustrent le principe de fonctionnement d'une variante avantageuse du principe d'affectation d'un potentiel à chaque cellule, tel qu'il a été décrit dans les paragraphes précédents. Cette variante du procédé selon l'invention présente pour avantage de rendre possible la prise en compte automatique de zones de vent par le procédé selon l'invention.

Pour prendre en compte de manière simple la variabilité de la force et de la direction du vent dans l'espace $E_{valide}$ le procédé selon l'invention modifie la définition du potentiel affecté à chaque cellule. La variation de potentiel n'est ici plus définie par la distance euclidienne séparant deux cellules voisine dont l'une est utilisée pour calculer le potentiel de l'autre, mais par le temps de parcours minimal nécessaire pour aller d'une cellule à l'autre, ce temps de parcours étant défini par la distance euclidienne et par la vitesse de progression réelle maximale de l'engin compte tenu de la direction et de la vitesse du vent rencontré. De la sorte les chemins optimaux sont considérés en terme de temps de parcours, un temps de parcours infini étant attribué aux cellules correspondant à des obstacles.

Le principe de calcul du temps de parcours, d'une cellule donnée à la cellule but considérée, mis en oeuvre par cette variante du procédé selon l'invention, repose sur le calcul du temps de parcours nécessaire à l'engin pour se rendre d'une cellule vers une cellule de son voisinage à une vitesse fonction de la vitesse maximale de l'engin et de la vitesse du vent. Ce principe, illustré par la figure 21 sur laquelle les flèches 2104 et 2105 figurent la direction du vent dans les cellules considérées, est décrit dans les paragraphes suivants.

Le principe de calcul du temps de parcours repose sur la définition d'un repère orthonormé (0, x, y) sur l'espace $E_{valide}$, et sur une décomposition de l'espace en cellules élémentaires, de forme carrée de préférence, alignées sur les axes 0x et 0y. Le calcul suppose par ailleurs que dans chaque cellule $C_i$ le vecteur vitesse du vent est connu et a pour expression:

$$v^v(C_i) = \begin{bmatrix} v^v_x(C_i) \\ v^v_y(C_i) \end{bmatrix}$$

Dans ce repère la vitesse maximale de l'engin a par ailleurs pour expression:

$$v^m(C_i) = \begin{bmatrix} v^m_x(C_i) \\ v^m_y(C_i) \end{bmatrix}$$

Par suite la vitesse réelle de progression de l'engin dans la cellule considérée a pour expression:

$$v^r(C_i) = v^m(C_i) + v^v(C_i) = \begin{bmatrix} v_x^m(C_i) + v_x^v(C_i) \\ v_y^m(C_i) + v_y^v(C_i) \end{bmatrix}$$

Par ailleurs, dans ce repère, le déplacement $d(C_i, C_j)$ de l'engin, de la cellule $C_i$ à la cellule $C_j$ a pour expression générale:

$$d(C_i, C_j) = \begin{bmatrix} d_x(C_i, C_j) \\ d_y(C_i, C_j) \end{bmatrix}$$

Comme le montre la figure 21 ce déplacement $d(C_i, C_j)$ 2101 peut être décomposé en deux déplacements élémentaires $d(C_i)$ 2102 et $d(C_j)$ 2103. Par suite on peut écrire:

$$d(C_i, C_j) = d(C_i) + d(C_j)$$

De même, si $t(C_i, C_j)$ est le temps de parcours relatif au déplacement $d(C_i, C_j)$, on peut également écrire:

$$t(C_i, C_j) = t(C_i) + t(C_j)$$

où $t(C_i)$ et $t(C_j)$ représentent respectivement les temps de trajets élémentaires relatifs aux trajets $d(C_i)$ et $d(C_j)$.
Afin de prendre en compte les variations des conditions locales de vent de cellule à cellule sur tout l'espace $E_{valide}$ il faut que le temps de trajet élémentaire effectué dans une même cellule incorpore la valeur locale $v^{vent}(C_i)$ du vecteur vitesse du vent. Ceci est réalisé de manière automatique si on considère non plus le trajet $d(C_i)$ mais le temps de trajet reel $t(C_i)$ défini par:

$$v^r(C_i) \cdot t(C_i) = d(Ci)$$

La relation précédente peut s'exprimer sous forme scalaire, en utilisant la relation définissant $v^r(C_i)$. On obtient alors le système d'égalités suivant:

$$\begin{cases} \left[v_x^m(C_i) + v_x^v(C_i)\right] \cdot t(C_i) = d(Ci) \\ \left[v_x^m(C_i) + v_x^v(C_i)\right] \cdot t(C_i) = d(Ci) \end{cases}$$

Ce système d'égalités permet de déterminer le temps de parcours élémentaire $t(C_i)$ en résolvant le polynôme du second degré suivant:

$$(v_x^{m^2} + v_x^{m^2} - v_x^{v^2} - v_y^{v^2}) \cdot t^2 + 2(d_x \cdot v_x^v + d_y \cdot v_y^v) \cdot t - (d_x^2 + d_y^2) = 0$$

où $t$ représente $t(C_i)$ et où $d_x$ et $dy$ représentent respectivement $d_x(C_i)$ et $d_y(C_i)$.

Par suite le temps $t(C_i, C_j)$ de parcours nécessaire pour passer d'une cellule $C_i$ à une cellule $C_j$ voisine peut être déterminé en résolvant le polynôme précédent pour ces deux cellules. On peut alors affecter à la cellule considérée non pas un potentiel exprimé en fonction de la distance mais un potentiel exprimé en fonction du temps de parcours.

Cette variante du procédé selon l'invention met en application ce principe de calcul et définit ainsi pour chaque cellule utile un potentiel représentant le temps de parcours le plus faible entre cette cellule et la cellule but considérée. L'affectation de ce potentiel est en outre réalisée suivant le même principe de collision de fronts d'ondes que pour la variante de base du procédé ne prenant pas en compte les variations de vitesse du vent sur l'espace $E_{valide}$.

La figure 22 illustre l'effet technique obtenu par l'affectation d'un potentiel relatif au temps de parcours et prenant en compte la vitesse du vent. Elle présente différents stades 2201 à 2204 de la propagation d'un front d'onde 2205 depuis un point de passage 2206, dans un contexte par ailleurs sensiblement identique à celui de la figure 17. Comme on peut le constater en comparant les deux figures, le front d'onde de potentiel exprimé en temps de parcours présenté à la figure 22 se développe automatiquement de manière préférentielle dans la direction du vent, symbolisée par la flèche 2207. Ainsi grâce à cette variante du procédé deux points situés à des distances différentes du point but peuvent en fonction du vent appartenir à la même équipotentielle, les trajets optimaux les reliant au point but ayant une durée identique.

Cette méthode particulièrement avantageuse de détermination du potentiel affecté à chacune des cellules de l'espace, est décrite ici dans le cas particulier, non limitatif, où la progression de l'engin au cours de sa mission peut être affectée par des conditions de vent variables définissant des zones de vent différentes par la force du vent et par sa direction dans l'espace $E_{valide}$. Cette méthode peut bien évidemment s'appliquer au cas d'engins pouvant subir d'autres types de conditions pouvant entraver leur progression. d'une zone, comme par exemple un engin sous-marin ayant à subir des courants, ou encore un engin terrestre dont la mission s'effectue sur un terrain accidenté. A ce titre la notion de contrainte de vent telle qu'évoquée dans ce qui précède peut être généralisée à d'autres contraintes localement variables et pouvant influencer la vitesse de progression de l'engin.

Ainsi, comme on l'a vu précédemment, le procédé selon l'invention comporte une première étape qui met en oeuvre une méthode avantageuse pour calculer de manière simple, rapide et économe en terme de charge de calcul, des chemins optimaux permettant de relier entre eux les différents points de passage caractérisant une mission donnée, tout en prenant en compte les obstacles fixes, ainsi que l'ordre de passage imposé par la mission. Le procédé selon l'invention propose en outre une variante de cette méthode permettant avantageusement de prendre en compte de façon automatique les variations de la vitesse du vent sur l'espace $E_{valide}$. Dans certains cas, cette méthode de détermination permet de calculer plusieurs chemins possibles pouvant relier de manière directe et optimale en terme de coût, deux points de passage dans l'ordre imposé par la mission. Dans une telle situation le choix du chemin à considérer peut par exemple être laissé à l'opérateur.

Dans une deuxième étape, le procédé selon l'invention élabore à partir des chemins optimaux calculés un itinéraire, ou chemin global permettant à l'engin de se rendre sur tous les points de passage objets de la mission tout en respectant les contraintes imposées par ailleurs. Le chemin en question est un chemin hamiltonien, c'est à dire un chemin permettant à l'engin en mission de visiter tous les points de passage ("waypoints"), mais une seule fois. Ce caractère hamiltonien se traduit par des contraintes sur les ordres de passage possible sur les différents points. De la sorte, certains itinéraires faisant passer l'engin deux fois au même endroit sont par principe exclus. Néanmoins, les contraintes imposées par une mission peuvent conduire à la possibilité d'envisager, à partir des chemins calculés, différents itinéraires correspondant à différents ordres de passage sur les points de passage de la mission. Or, on conçoit aisément que suivant l'ordre de passage de l'engin sur ces points la durée de la mission peut être différente. C'est pourquoi il importe que le procédé mis en oeuvre puisse trier de manière automatique les différents itinéraires possibles de façon à déterminer l'itinéraire optimal, c'est à dire celui conférant la plus grande autonomie à l'engin.

Pour effectuer cette étape, le procédé selon l'invention utilise un algorithme de recherche, connu sous le non d'algorithme A*. Cet algorithme connu par ailleurs n'est pas détaillé ici. Dans le cadre du procédé selon l'invention cet algorithme est employé pour effectuer le choix d'un itinéraire optimal dans l'arbre constitué de tous les itinéraires possibles. Chacun de ces itinéraires possibles est constitué par la mise bout à bout dans un ordre donné des chemins optimaux calculés à l'étape précédente. La complexité de l'arbre à analyser est naturellement fonction du nombre de points de passage que comporte la mission. Aussi pour accélérer la recherche et la détermination d'un itinéraire satisfaisant toutes les contraintes liées à la mission, il est avantageux de restreindre le champ d'analyse en ne s'attachant qu'aux itinéraires possibles satisfaisant des contraintes minimales qui garantissent que les itinéraires analysés sont à coup sûr des itinéraires satisfaisant toutes les contraintes liées à la mission. La mise en oeuvre de l'algorithme A*, modifié selon l'invention pour tenir compte de ces contraintes, permet avantageusement d'opérer cette limitation à condition que le critère de limitation soit judicieusement choisi.

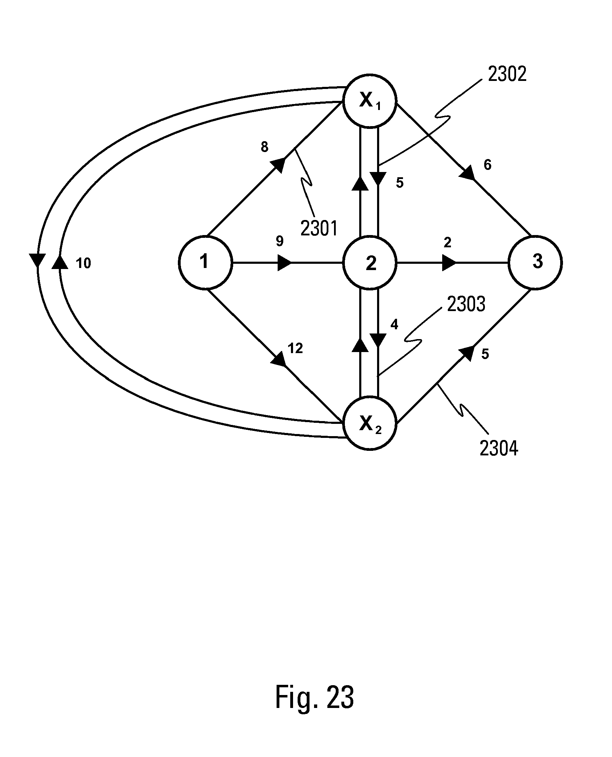

A cet effet, le procédé selon l'invention associe à l'algorithme A* une heuristique particulière qui associe à chaque trajet figuré sur le graphe de connectivité un temps de trajet correspondant au chemin optimal, calculé à l'étape précédente, permettant d'effectuer ce trajet. La méthode mise en oeuvre par le procédé selon l'invention peut être décrite de manière générale comme suit en s'appuyant sur l'exemple correspondant au graphe de connectivité de la figure 23.

On appelle $N_D, N_A$ les noeuds correspondant respectivement aux points de départ et d'arrivée de la mission, et $N_i$ tous les noeuds correspondant aux points intermédiaires ($P_i$ ou $X_i$) à parcourir entre $N_D$ et $N_A$. On appelle en outre $a_{ij}$ le trajet partant d'un noeud $N_i$ pour aboutir à un autre noeud $N_j$ et $t_{ij}$ les temps de parcours associés à ce trajet. On définit également $h_i$ comme le temps de parcours minimal pouvant être réalisé à partir de $N_i$. $h_i$ est défini par la relation suivante:

$$h_i = \min_j t_{ij}$$

On peut noter ici que les temps $t_{ij}$ tiennent déjà compte des obstacles et du vent.

Par suite le temps de parcours correspondant au trajet entre $N_D$ et $N_A$ peut être estimé par la grandeur $H_D$ définie par la relation:

$$H_D = h_D + \sum_i h_i$$

où $h_D$ est le temps de parcours minimal pouvant être réalisé à partir de $N_D$ et $h_i$ le temps de parcours minimal pouvant être réalisé à partir de $N_i$.

De la même façon, le temps de parcours correspondant au trajet entre un noeud $N_i$ et le noeud $N_A$, peut être estimé par la grandeur $H_i$ définie par la relation:

$$H_i = h_i + \sum_j h_j$$

En outre, Si le noeud $N_D$ est relié à N noeuds $N_n$, la durée de chacun des N itinéraires partant de $N_D$ pour aboutir à $N_A$ en passant par $N_n$ peut être estimée au travers de la grandeur $T_n$ définie par la relation suivante:

$$T_n = T_{1,n} + H_n \ \text{ avec n variant de 1 à N}$$

où $T_{1,n}$ représente le temps de parcours réel correspondant au parcours de du point de départ $N_1$ au premier point choisi pour débuter l'itinéraire.

Par suite, l'algorithme de recherche mis en oeuvre par le procédé selon l'invention procède de manière récursive à la sélection des noeuds constituant le graphe. A chaque nouvelle récurrence, le noeud $N_j$ relié au noeud $N_i$ sélectionné à la récurrence précédente et pour lequel la grandeur $T_j$ est la plus faible, est le noeud sélectionné. L'estimation T de la durée de l'itinéraire ainsi défini est alors définie par la relation suivante:

$$T = T_1 + T_2 + \ldots + T_i + H_j$$

$T_1, T_2, \ldots T_j$ correspondent au temps de parcours correspondant au chemin reliant chacun des noeuds déjà sélectionnés à une itération donnée j au noeud sélectionné à l'itération précédente.

De la sorte, si $T_F$ représente le temps de parcours correspondant au chemin reliant le dernier noeud sélectionné au noeud $N_A$, on peut écrire:

$$T = T_1 + T_2 + \ldots + T_F$$

On dispose alors d'un itinéraire entièrement défini dont on connaît la durée exacte.

Si on applique l'algorithme décrit précédemment à l'exemple de la figure 23, le noeud $P_1$ est pris comme noeud de départ $N_D$ et le noeud $P_3$ comme noeud d'arrivé $N_A$, on obtient les résultats suivants:

Selon l'invention, l'algorithme mis en oeuvre procède à une première itération qui a pour objet de déterminer lequel des noeuds, parmi le noeud $P_2$, le noeud $X_1$ et le noeud $X_2$, doit être sélectionné. On calcule donc les grandeurs h attachées à chacun des noeuds:

$h_1$ = min (5, 2, 4) = 2, pour le noeud $P_2$
$h_2$ = min (10, 5, 6) = 5, pour le noeud $X_1$
$h_3$ = min (10, 4, 5) = 4, pour le noeud $X_2$

l'analyse de l'itinéraire passant par $P_2$, conduit à une estimation T du temps de parcours entre $N_D$ et $N_A$ égale à:

$$T = 9 + [2 + (5 + 4)] = 9 + 11 = 20$$

Tandis que l'analyse des itinéraires passant par $X_1$ et $X_2$ conduisent respectivement à des estimations égales à:

$$T = 8 + 2 + (5 + 4) = 8 + 11 = 19, \text{ pour un passage par } X_1$$

et

$$T = 12 + 2 + (5 + 4) = 12 + 11 = 23, \text{ pour un passage par } X_2.$$

L'estimation minimale correspondant au passage par le noeud $X_1$. l'algorithme A* modifié selon l'invention sélectionne donc la branche 2301 du graphe passant par $P_1$ et $X_1$. Les autres branches sont alors ignorées.

L'algorithme mis en oeuvre procède ensuite à une deuxième itération durant laquelle les chemins partant de $X_1$ et passant par $P_2$ et $X_2$ sont évalués. On obtient les résultats suivants:

$$T = 8 + 5 + [(2 + 4)] = 13 + 6 = 19 \text{ pour un passage par } P_2$$

et

$$T = 8 + 10 + (4 + 2) = 18 + 6 = 24, \text{ pour un passage par } X_2.$$

L'estimation minimale correspondant cette fois-ci au passage par le noeud $P_2$. L'algorithme A* modifié selon l'invention sélectionne donc la branche 2302 du graphe passant par $X_1$ et $P_2$. Les autres branches sont alors elles sont alors laissées de côté. Elles pourront cependant être reprises dès que l'estimation courante leur est supérieure.

A l'issue de ces deux itérations le procédé selon l'invention permet de retenir un itinéraire passant successivement par $P_1$, $X_1$ et $P_2$. Ensuite, compte tenu des contraintes relatives aux ordres de passage sur les points, l'algorithme selon l'invention détermine l'unique itinéraire tenant compte de ces contraintes. Cet itinéraire complet passe par les différents points dans l'ordre suivant:

$P_1$ puis $X_1$ ( branche 2301), puis $P_2$ ( branche 2302), puis $X_2$ ( branche 2303), puis enfin $P_3$ (branche 2304).

Par suite le temps de trajet correspondant a pour valeur:

$$T = 8 + 5 + 4 + 5 = 22$$

Ainsi comme permet de le constater la figure 23, l'algorithme A* modifié selon l'invention permet de déterminer de manière systématique un itinéraire répondant aux contraintes imposées. Avantageusement, la méthode utilisée permet d'éviter une exploration systématique de l'ensemble des itinéraires possibles, en particulier grâce à l'utilisation d'une heuristique basée sur la détermination d'une durée minimale pour l'évaluation du tronçon d'itinéraire partant de chaque noeud sélectionné. Il est en effet à noter que l'emploi d'une heuristique d'une autre nature ne conduirait pas nécessairement de manière systématique à un résultat exploitable, en particulier si les conditions locales de vent ne sont pas prises en compte pour la sélection des noeuds.

Il est également à noter que l'algorithme utilisé par le procédé selon l'invention a pour objectif de réaliser la détermination d'un itinéraire compatible avec les contraintes de la mission, notamment les contraintes concernant l'ordre de franchissement des points de passage, les intervalles de temps alloués pour le passage sur chacun des points et l'autonomie de l'engin qui conditionne la durée maximale de la mission. Il a également pour objectif de réaliser cette détermination dans un temps minimum imposé. L'itinéraire ainsi défini peut donc parfois s'avérer ne pas être parfois le plus court.

Il faut également noter qu'à chaque itération l'une des tâches effectuées par l'algorithme mis en oeuvre consiste à vérifier que le temps de trajet intermédiaire déterminé est compatible des contraintes relatives aux intervalles de temps de passage imposées par la mission. Si tel n'est pas le cas, le noeud sélectionné est abandonné et un autre noeud est sélectionné. Cependant, si aucun des noeuds de cette itération ne conduit à un itinéraire satisfaisant l'algorithme mis en oeuvre reprend l'analyse depuis l'itération précédente.

L'algorithme de recherche A* classique, connu, est en outre modifié pour introduire dans la recherche un contrat de temps. Comme cela a été dit précédemment l'optimalité de la solution fournie par l'algorithme de recherche n'est pas exigée. On souhaite simplement définir un itinéraire permettant a priori de remplir la mission. Ainsi, il est inutile d'effectuer une recherche complète dans l'arbre pour déterminer le meilleur itinéraire. Cette liberté permet d'introduire dans l'algorithme A* modifié selon l'invention une contrainte supplémentaire de temps de recherche. L'itinéraire optimal ainsi déterminé constitue alors la meilleure solution trouvée dans un temps donné.

De la sorte, lorsqu'on met en oeuvre l'algorithme selon l'invention, trois cas peuvent se présenter :

1. La recherche complète a été effectuée dans le temps imparti. Le contrat de temps n'a ici joué aucun rôle. La solution renvoyée (si elle existe) est optimale.

2. Le contrat de temps est atteint et une solution a été trouvée. La recherche est alors stoppée et la solution renvoyée.

3. Le contrat de temps est atteint et aucune solution n'a été trouvée : la recherche est prolongée jusqu'à détection d'une solution.

Dans la pratique, ce contrat de temps est représenté par un paramètre d'entrée, fié par exemple à moins de 1 seconde.

Il est à noter que des tests effectués par la déposante montre que le premier cas correspond aux missions comportant de l'ordre d'une dizaine de points de passage. Les missions comportant plus de vingt points de passage correspondent fréquemment dans le cas 2. Le cas 3 qui peut se présenter pour des missions fortement contraintes, n'a pas été observé lors des tests.

Dans une troisième étape de traitement des obstacles mobiles, le procédé selon l'invention détermine parmi ces chemins optimaux ceux sur lesquels l'engin est susceptible de croiser la trajectoire d'obstacles mobiles. Le problème potentiel soulevé par ce croisement consiste à déterminer si lorsque le mobile passe dans la zone de croisement à une vitesse donnée, l'obstacle mobile qui suit cette trajectoire se trouve également dans cette zone. Le problème soulevé consiste dans ce cas à trouver une solution permettant d'éviter la collision tout en empruntant ce chemin jugé optimal. Comme cela a été dit précédemment, certains procédés de planification connus procèdent dans un cas semblable à la substitution d'un chemin de remplacement au chemin optimal. Ce chemin de remplacement qui ne constitue pas nécessairement un chemin optimal est choisi de façon à ne pas couper la trajectoire d'un obstacle mobile, parfois au prix de détours importants. D'autres procédés connus mettent en oeuvre des méthodes utilisant une représentation locale dans un espace temps de la trajectoire de l'engin associée à une variation de la vitesse de l'engin le long de la portion de trajectoire considérée. Cependant, cette variation reste généralement assez sommaire et a essentiellement pour but d'éviter la collision avec les obstacles mobiles. Sa mise en oeuvre a généralement pour conséquence d'allonger de manière un peu aveugle et souvent importante le temps mis pour parcourir ce chemin. Cet allongement peut en outre s'avérer incompatible des contraintes d'intervalle temporel de passage imposées par la mission. On est dans ce cas contraint de redéfinir l'ensemble de l'itinéraire. Pour résoudre le problème posé par le croisement d'un chemin et de la trajectoire d'un obstacle mobile, le procédé selon l'invention met en oeuvre au cours d'une deuxième phase la méthode avantageuse décrite dans les paragraphes suivants.

Pour prendre en compte l'éventualité du croisement d'un obstacle mobile par l'engin durant sa mission, alors qu'il emprunte un chemin optimal joignant deux points de passage, le procédé selon l'invention met en oeuvre une méthode consistant à analyser l'itinéraire défini par l'ensemble de ces chemins optimaux dans un espace d'observation à deux dimensions. Dans cet espace, une des dimensions correspond à l'abscisse curviligne mesurée sur cet itinéraire et l'autre dimension au temps. Cette espace d'observation est lui-même discrétisé en cases élémentaires dans lesquelles sont situés les points de passage relatif à la mission considérée.

Cette représentation permet avantageusement de définir plusieurs zones qui conditionnent de manière simple le trajet de l'engin et permet de déterminer de manière tout aussi simple de quelle façon il est possible de moduler la vitesse de l'engin sur l'ensemble du parcours de façon à éviter les collisions.

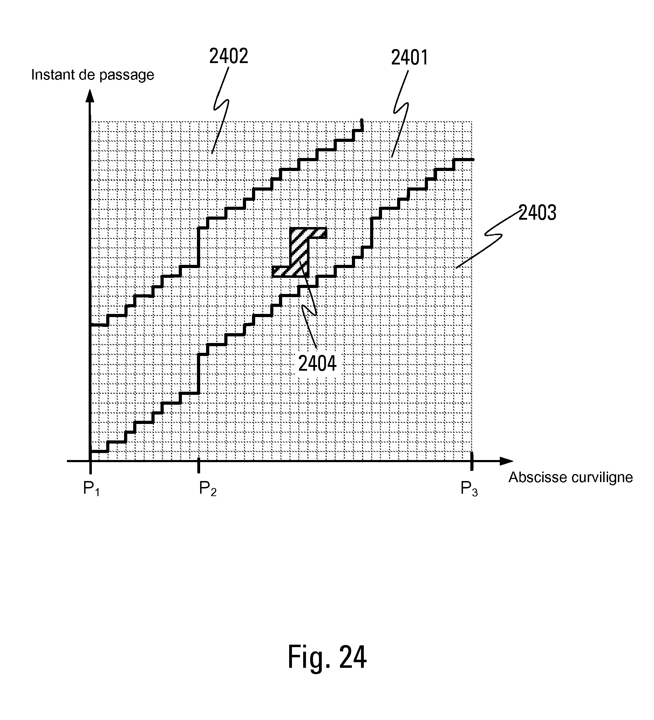

Pour mieux la méthode utilisée par le procédé selon l'invention, on considère l'exemple simple de la figure 24, exemple aisément généralisable à une situation plus complexe.

La figure 24 constitue la représentation dans l'espace-temps défini précédemment, de l'itinéraire d'une mission comportant 3 points de passage $P_1$, $P_2$ et $P_3$, $P_1$ étant le point de départ et $P_3$ le point d'arrivée. Cet itinéraire croise par ailleurs la route d'un obstacle mobile, un avion de ligne par exemple. De la sorte, et grâce à cette représentation particulière qui prend l'abscisse curviligne et le temps comme repères, le contexte de la mission prise ici comme exemple permet de distinguer quatre types de zones d'intéret. Dans ce mode de représentation, on distingue en effet, de manière générale,une zone centrale 2401 qui se présente sous la forme d'un couloir s'étendant de l'abscisse $s_0$, correspondant au point de départ $P_1$ à l'abscisse $s_{max}$ qui correspond au point d'arrivée $P_3$. Cette zone centrale correspond à la zone possible d'évolution de l'engin, compte tenu de sa vitesse maximale et des intervalles de temps de passage attribué à chaque point de passage.

Dans ce mode de représentation, cette zone centrale est tout naturellement encadrée par deux zones latérales, la zone supérieur 2402 et la zone inférieure 2403 constituée des cases spatio-temporelles pour lesquelles les conditions sur la vitesse maximale et/ou sur les intervalles de passage ne sont pas respectées.

Dans ce mode de représentation, la zone centrale, peut également inclure une ou plusieurs une zone internes 2404 qui représentent les zones spatio-temporelles occupées par les obstacles mobiles considérés. Dans l'exemple de la figure 24, on distingue une zone interne qui représente l'avion mentionné précédemment. S'agissant d'un obstacle mobile cette zone s'étend naturellement de manière limitée dans le temps et dans l'espace, le long du trajet de l'engin. Les contours d'une zone interne 2404 sont principalement déterminés par la vitesse de déplacement de l'obstacle mobile sur la portion de sa trajectoire qui coupe l'itinéraire de l'engin, et par la taille de cet obstacle et la taille de la zone de sécurité qui l'entoure.

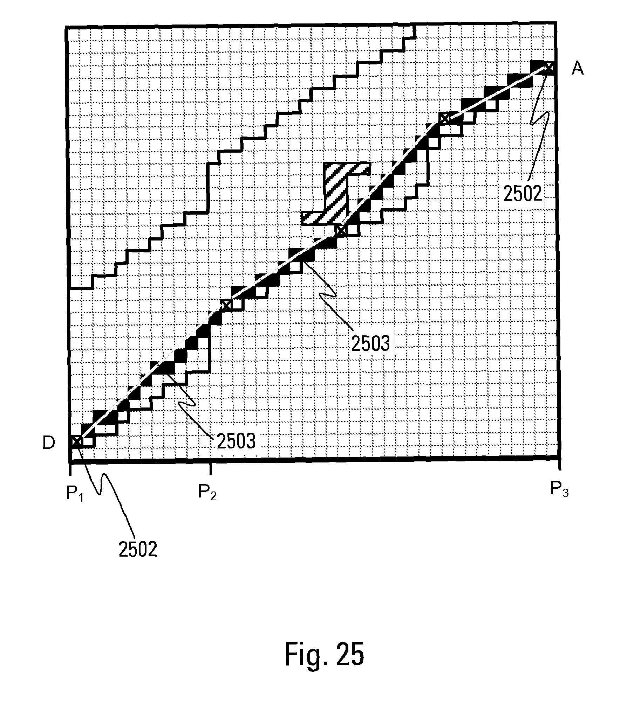

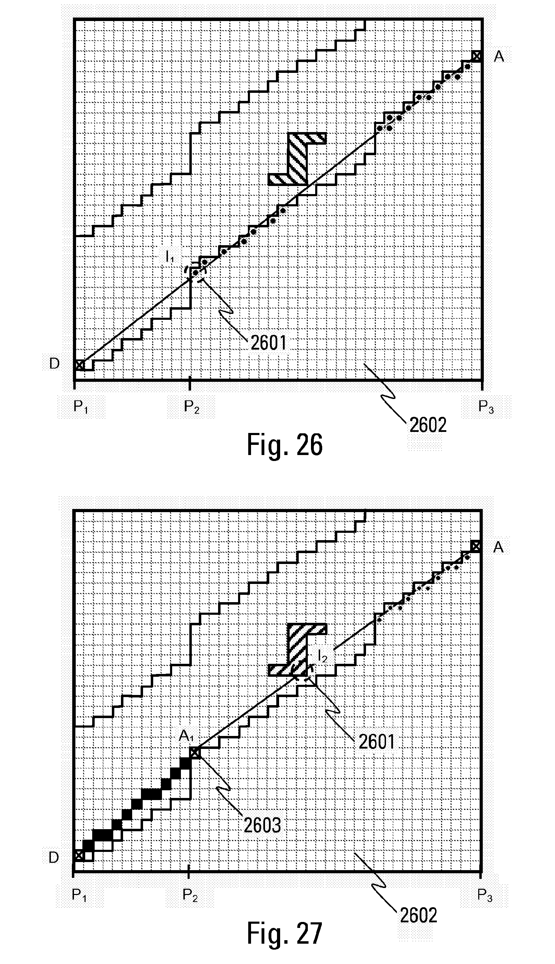

Cette première étape de définition des différentes zones d'intérêt étant réalisée, le procédé selon l'invention procède ensuite à la recherche de la chronométrie optimale pour parcourir le trajet déterminé pour effectuer la mission. En pratique, cette étape consiste à rechercher dans l'espace-temps la courbe cheminant à l'intérieur de la zone centrale au plus près de la frontière séparant la zone centrale de la zone latérale inférieure et ne traversant aucune zone interne. En effet une courbe passant par les cases situées au plus près de cette frontière correspond à la progression de l'engin la plus rapide possible. La suite de la description propose deux méthodes ou algorithmes permettant d'effectuer cette recherche, méthodes illustrées par les figures 25 et 26.

Dans une première forme de mise en oeuvre, proposée à titre d'exemple, la recherche de la chronométrie optimale est réalisée en utilisant un premier algorithme ou algorithme "de l'alpiniste". Cet algorithme, illustré par la figure 25, a pour fonction de relier un point de départ D ($P_1$ sur la figure), situé dans la première colonne de cases qui compose l'espace-temps à un point d'arrivée A ($P_3$ sur la figure), situé dans la dernière colonne, par une succession de segments. Les points D, 2501, et A, 2502, représentent par exemple respectivement le premier et le dernier point de passage de la mission effectuée par l'engin, respectivement $P_1$ et $P_3$.

Il consiste essentiellement, en partant du point D à chercher de manière récursive le point $P_i$ de la zone centrale, situé dans la case la plus éloignée de D et la plus proche possible de la frontière avec la zone latérale inférieure et tel que le segment $[P_i D]$ ne croise pas d'obstacle. Il consiste ensuite à construire de manière récursive des segments j successifs, dont le point de départ $D_j$ est le point $P_i$ défini pour le segment précédent. On détermine ainsi de proche en proche une succession de segments 2503 parcourant l'itinéraire de l'engin, le dernier segment ayant pour point P le point d'arrivée A. Il est à noter que selon cet algorithme, lorsque pour une itération i donnée on ne trouve pas de point $P_i$, il est nécessaire de revenir aux récurrences précédentes pour choisir des points $P_{i-1}$, $P_{i-2}...P_1$, situés par exemple dans des cases plus éloignées de la frontière avec la zone latérale inférieure, permettant de déterminer un point $P_i$.

La démarche suivie par cet algorithme, qui fait penser à celle d'un alpiniste qui place des mousquetons sur une paroi, les mousquetons matérialisant les points d'arrivée successifs et les segments de droites la corde, permet avantageusement de minimiser à la fois les temps de parcours et les variations de la vitesse de l'engin. En effet, en effectuant systématiquement pour chaque segment le choix du point le plus proche de la frontière avec la zone latérale inférieure 2504, il privilégie pour chaque segment le point d'arrivée qui correspond au temps de parcours le plus faible.

De même en choisissant comme point P, pour chaque segment, le point le plus à droite, Il maintient constante la vitesse de l'engin le plus longtemps possible et limite les variations de vitesse, coûteuses en énergie.

Dans une autre forme préférée de mise en oeuvre, la recherche de la chronométrie optimale est réalisée en utilisant un autre algorithme consistant à relier le point de départ D au point d'arrivée A par un segment de droite, à identifier toutes les zones où ce segment entre en collision avec un obstacle fixe (cellule de la zone latérale inférieure) ou mobile (zone interne) et à faire subir à ce segment des cassures successives de sorte que, finalement, les segments ainsi constitués n'entrent plus en collision avec aucun obstacle.

Pour réaliser cette ligne brisée l'algorithme procède par dichotomie en analysant d'abord pour chaque segment [AB] constituant la ligne brisée, les points de collisions, puis en déterminant, pour le point de collision I le plus proche du point de départ D, le point P situé à la même abscisse curviligne et le plus proche possible de la frontière avec la zone latérale inférieure, puis enfin en analysant les segments [AP] et [PB] ainsi formés. Si l'un ou l'autre de ces segments présente des points de collision il est lui-même brisé au niveau du point d'intersection le plus proche de D. Ainsi, tant que subsiste une collision le segment initial subit une nouvelle brisure.

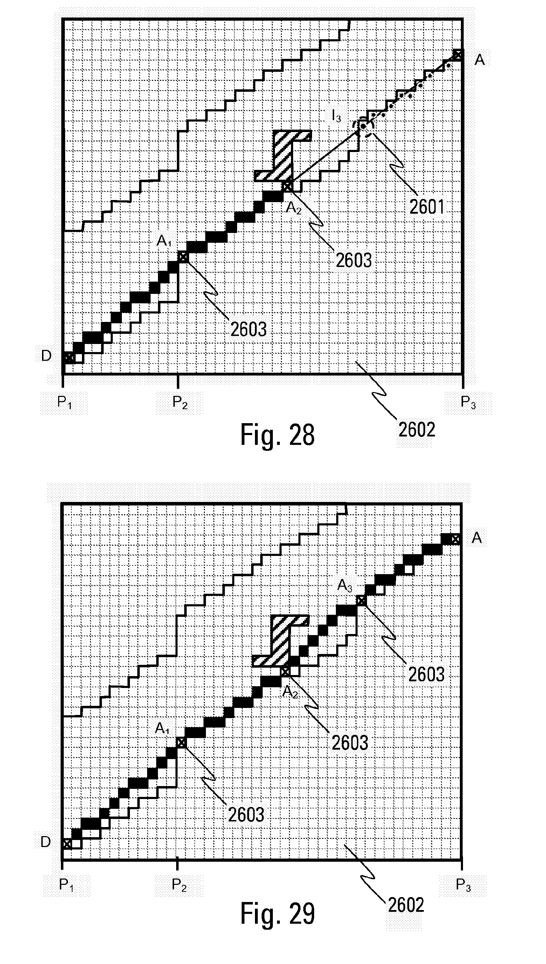

Cet algorithme est illustré par les figures 26 à 29 qui représentent des étapes successives dans lesquelles le segment reliant le point D au point A est successivement brisé en quatre segments de façon à éliminer de proche en proche tous le points de collision initialement présents. Sur ces figures, les points d'intersection $I_i$, 2601, déterminés à chaque opération de brisure sont entourés d'un cercle. Chaque point $I_i$ donne naissance à un point intermédiaire $A_i$, 2603, qui constitue une des extrémités d'un des segments formés à chaque brisure. On obtient finalement un segment de ligne brisée d'extrémités A et D, et passant par tous les points $A_i$ définis par l'algorithme.

Il est à noter que comme pour l'algorithme précédent, si pour une itération il n'est pas possible de trouver de point $A_i$ permettant d'obtenir un segment sans collision, il est nécessaire d'effectuer un retour en arrière de façon à effectuer une brisure du segment précédent passant par un point $P_i$ un peu plus éloigné de la frontière avec la zone latérale inférieure 2602.

Cet algorithme, mis en oeuvre dans une forme préférée du procédé selon l'invention permet d'obtenir en terme de courbe chronométrique optimale, des résultats sensiblement équivalents à l'algorithme de l'alpiniste décrit précédemment. En revanche des tests effectués par la déposante montre que de manière statistique, l'algorithme procédant par génération de lignes brisées permet de déterminer une chronométrie optimale en explorant avantageusement un nombre total de cases plus restreint.

Les deux algorithmes décrits précédemment sont proposés ici proposés à titre d'exemples non limitatifs de méthodes permettant de déterminer la chronométrie de l'itinéraire d'un engin en mission. Ces algorithmes présentent cependant l'avantage particulier de privilégier l'économie de carburant, et donc l'autonomie de l'engin. Ils présentent également l'avantage de ne pas conduire à des phases stationnaires, durant lesquelles l'engin est supposé rester stationnaire. Ils sont donc particulièrement adapté à l'élaboration d'un itinéraire de mission, appelé dans ce cas plan de vol, pour aéronefs automatiques de type drone.

## Revendications

1. Procédé pour planifier la trajectoire d'un engin en mission dans un espace donné comportant des obstacles fixes et mobiles, ladite mission, d'une durée donnée, imposant des points de passage, des contraintes sur l'ordre de passage sur ces points et des contraintes sur les intervalles de temps durant lesquels l'engin doit passer sur certains points de passage, **caractérisé en ce qu'**il comporte:

   - une étape de calcul des chemins optimaux reliant les différents points de passage deux à deux, un chemin optimal correspondant au temps de parcours le plus faible entre deux points donnés,
   - une étape de détermination d'un itinéraire optimal à partir des chemins optimaux calculés, un itinéraire optimal étant défini comme une association des chemins optimaux conforme à l'ordre de passage défini par la mission, , cette association permettant d'aller du point de départ au point d'arrivée en respectant les contraintes imposées par la mission,
   - une étape de modulation de la vitesse de l'engin le long de l'itinéraire optimal déterminé, la vitesse étant modulée sur l'ensemble de l'itinéraire suivi pour prendre en compte la présence d'obstacles mobiles dont les trajectoires coupent l'itinéraire optimal déterminé en des lieux et des instants donnés, tout en minimisant le temps global de parcours.

2. Procédé selon la revendication 1, dans lequel l'étape de calcul des chemins optimaux comporte:

   - une étape de décomposition approchée de l'espace $E_{valide}$ en cellules élémentaires, d'affectation à chaque cellule d'intérêt d'un potentiel artificiel défini par propagation d'un front d'onde de potentiel depuis chaque cellule contenant un point de passage

- une étape de calcul des chemins optimaux proprement dite, le calcul de chaque chemin étant réalisé en parallèle à partir de la propagation d'un front d'onde de potentiel depuis chaque cellule contenant un point de passage et des cellules pour lesquelles des collisions entre les fronts d'ondes se produisent, chaque chemin optimal étant calculé à partir des tronçons de chemins optimaux reliant les deux points de passage considérés au point de collision des fronts issus de ces deux points de passage.

3. Procédé selon la revendication 2, dans lequel le potentiel attribué à chaque cellule est calculé de proche en proche depuis la cellule à l'origine du front correspondant, le potentiel de chaque cellule étant déterminé par la distance euclidienne qui la sépare des huit cellules environnantes constituant le voisinage de Moore de la cellule considérée.

4. Procédé selon la revendication 2, dans lequel le potentiel attribué à chaque cellule est calculé de proche en proche depuis la cellule à l'origine du front correspondant, le potentiel de chaque cellule étant déterminé par le temps de parcours réel de la distance qui la sépare des huit cellules environnantes constituant le voisinage de Moore de la cellule considérée.

5. Procédé selon la revendication 4, dans lequel le calcul du temps de parcours réel prend en compte la vitesse et la direction du vent dans les cellules considérées.

6. Procédé selon l'une des revendications 2 ou 3, dans lequel la détermination du chemin optimal en distance reliant deux points de passage est réalisée par un procédé de "surfing", le chemin étant déterminé en se déplaçant de manière itérative d'une cellule donnée vers la cellule du voisinage qui présente le potentiel le plus faible parmi toutes les cellules constituant ce voisinage.

7. Procédé selon l'une des revendications 2 ou 3, dans lequel le calcul du chemin optimal entre deux points de passage est réalisé en mémorisant pour chaque cellule, la cellule ayant servi à déterminer son potentiel; ce chemin optimal étant alors défini comme celui traversant la succession des cellules qui constituent la chaîne de cellules reliant les cellules correspondant aux points de passage considérés.

8. Procédé selon l'une quelconque des revendications précédentes dans lequel l'étape de détermination d'un itinéraire optimal est réalisée en mettant en oeuvre un algorithme associant un algorithme de recherche de type A* avec une Heuristique prenant en compte, pour chaque itinéraire considéré, le temps de parcours minimum pouvant être réalisé depuis chaque point de passage, l'algorithme de recherche étant optimisé pour déterminer, dans un temps de recherche fixé, un des itinéraires possibles remplissant les conditions imposées par la mission.

9. Procédé selon la revendication 6, dans lequel l'algorithme de recherche prend en compte un paramètre constituant un contrat de temps d'exécution.

10. Procédé selon l'une quelconque des revendications précédentes, dans lequel l'étape de modulation de la vitesse de l'engin le long de l'itinéraire optimal met en oeuvre deux opérations:

- une première opération consistant à représenter l'itinéraire défini par l'ensemble de ces chemins optimaux dans un espace d'observation à deux dimensions, une des dimensions correspondant à l'abscisse curviligne mesurée sur cet itinéraire et l'autre dimension au temps, cet espace d'observation étant lui-même discrétisé en cases spatio-temporelles élémentaires dans lesquelles sont situés les points de passage relatifs à la mission considérée, cette première étape définissant différentes zones d'intérêt,
- une deuxième opération consistant à rechercher la chronométrie optimale pour parcourir le trajet déterminé pour effectuer la mission.

11. Procédé selon la revendication 10, dans lequel l'analyse, dans l'espace temps considéré, de l'itinéraire défini par l'ensemble de ces chemins optimaux, est réalisée en définissant une zone centrale (2401), encadrée une zone latérale supérieure (2402) et une zone latérale inférieure (2403); la zone centrale formant un couloir s'étendant d'une abscisse $s_0$, correspondant au point de départ $P_1$ à une abscisse $s_{max}$ correspondant au point d'arrivée $P_3$ et représentant la zone possible d'évolution de l'engin, compte tenu de sa vitesse maximale et des intervalles de temps de passage attribués à chaque point de passage; la zone latérale supérieure (2402) et la zone latérale inférieure (2403) étant formées par les cases spatio-temporelles pour lesquelles les conditions sur la vitesse maximale et/ou sur les intervalles de passage ne sont pas respectées.

**12.** Procédé selon la revendication 11, dans lequel la deuxième opération de l'étape de modulation de la vitesse de l'engin le long de l'itinéraire optimal, met en oeuvre l'algorithme de "l'alpiniste" consistant à chercher de manière récursive, en partant du point $P_1$, le point $P_i$ de la zone centrale situé dans la case spatio-temporelle la plus éloignée de $P_1$ et la plus proche possible de la frontière avec la zone latérale inférieure et tel que le segment $[P_i P_1]$ ne croise pas d'obstacle, puis à construire de manière récursive des segments j successifs, dont le point de départ est le point $P_i$ défini pour le segment précédent..

**13.** Procédé selon la revendication 11, dans lequel la deuxième opération de l'étape de modulation de la vitesse de l'engin le long de l'itinéraire optimal, met en oeuvre l'algorithme des "lignes brisées" consistant à relier par un segment de droite le point de départ D du trajet au point d'arrivée A, à identifier toutes les zones où ce segment entre en collision avec un obstacle fixe (cellule de la zone latérale inférieure) ou mobile (cellule de la zone interne) et à faire subir à ce segment des cassures successives de sorte que, finalement, les segments ainsi constitués n'entrent plus en collision avec aucun obstacle.

Fig. 1

Fig. 2

Fig. 3

Fig. 4

Fig. 5

Fig. 6

Fig. 7

Fig. 8

Fig. 9

Fig. 10

Fig. 12

Fig. 11

Fig. 13

Fig. 14

Fig. 15

Fig. 16

Fig. 17

EP 1 835 370 A2

EP 1 835 370 A2

Fig. 18

Fig. 19

Fig. 20

Fig. 21

Fig. 22

Direction du vent

Fig. 23

Fig. 24

Fig. 25

Fig. 26

Fig. 27

Fig. 28

Fig. 29